# EUROPEAN PATENT SPECIFICATION

(11) **EP 4 281 732 B1**
(45) Date of publication and mention of the grant of the patent: **09.12.2026**
(21) Application number: 22700196.3
(22) Date of filing: 06.01.2022
(51) Int. Cl.: G01C 21/20, G06Q 10/08, G08G 3/00, G08G 3/02

(54) **BLUE VISBY - OPTIMIZED COORDINATION OF WATER-BASED TRANSPORT VESSELS**
VISBY-OPTIMIERTE BLAUKOORDINATION VON WASSERBASIERTEN TRANSPORTBEHÄLTERN
BLUE VISBY - COORDINATION OPTIMISÉE DE NAVIRES DE TRANSPORT NAUTIQUE

(30) Priority: 22.01.2021 US 202163140424 P
(43) Date of publication of application: 29.11.2023
(73) Proprietor: Blue Visby Services Limited, London EC3R 7AE (GB)
(72) Inventor: ZOGRAFAKIS, Charalampos, Canterbury Kent CT1 3DN (GB)
(74) Representative: Mewburn Ellis LLP
(86) International application number: PCT/IB2022/050093
(87) International publication number: WO 2022/157589

(56) References cited:
- WO-A1-2020/115731
- WO-A1-2020/245491
- CN-A- 109 615 933
- CN-A- 109 740 494
- CN-A- 111 580 499
- US-A1- 2019 303 859
- SUN BIN ET AL: "Cooperative Optimization for Port and Shipping Line with Unpredictable Disturbance Consideration", 2018 14TH INTERNATIONAL CONFERENCE ON NATURAL COMPUTATION, FUZZY SYSTEMS AND KNOWLEDGE DISCOVERY (ICNC-FSKD), IEEE, 28 July 2018 (2018-07-28), pages 113 - 118, XP033537681, [retrieved on 20190410], DOI: 10.1109/FSKD.2018.8686901
- INTERNATIONAL MARITIME ORGANIZATION (IMO): "Just in time arrival guide", 31 December 2020 (2020-12-31), pages 1 - 74, XP055982967, Retrieved from the Internet <URL:https://wwwcdn.imo.org/localresources/en/OurWork/PartnershipsProjects/Documents/GIA-just-in-time-hires.pdf> [retrieved on 20221118]
- HENG ZHANG ET AL: "Green shipping oriented coordinated berth allocation for port group", 2015 34TH CHINESE CONTROL CONFERENCE (CCC), TECHNICAL COMMITTEE ON CONTROL THEORY, CHINESE ASSOCIATION OF AUTOMATION, 28 July 2015 (2015-07-28), pages 8466 - 8471, XP033202598, DOI: 10.1109/CHICC.2015.7260978
- JI KAIXIANG ET AL: "Accurate bounding box for ship detection on remote sensing images with complex background", SPIE PROCEEDINGS; [PROCEEDINGS OF SPIE ISSN 0277-786X], SPIE, US, vol. 11432, 14 February 2020 (2020-02-14), pages 1143208 - 1143208, XP060128110, ISBN: 978-1-5106-3673-6, DOI: 10.1117/12.2538042

## Description

### CROSS-REFERENCES TO RELATED APPLICATIONS

This application claims priority to U.S. Patent Application Ser. No. 63/140,424 (the " '424 Application"), filed January 22, 2021 by Charalampos Zografakis (attorney docket no. 1261.01PR), entitled, "Blue Visby - Optimized Coordination of Water-Based Transport Vessels,".

### FIELD

The present disclosure relates, in general, to methods, systems, and apparatuses for implementing coordination of vehicles, and, more particularly, to methods, systems, and apparatuses for implementing optimized coordination of water-based transport vessels (referred to herein as "Blue Visby").

### BACKGROUND

Maritime transport contributes about 2% of worldwide greenhouse gas ("GHG") emissions, a large part of which may be attributed to Bulk Cargo Vessels and Container Vessels, or the like (collectively, "Cargo Vessels" or the like). Conventionally, Cargo Vessels steam from the load port to the discharge port at a service speed, regardless of the movements of other ships or of other Cargo Vessels destined for the same port, and regardless of present or expected congestion due to the conventional "Sail Fast, Then Wait" ("SFTW") operational model typically employed by Cargo Vessels.

Reducing the speed of a fleet of Cargo Vessels, is a technical problem that requires technical, operations, and contractual interventions. At present, there are no technical, operational, or contractual arrangements in place for the coordination of the voyages of ocean-going cargo ships, along the lines of air traffic control or airspace management systems. All prior attempts to solve such problems have foundered due to commercial and contractual obstacles that are exacerbated by the fragmentation of maritime and port industries.

Hence, there is a need for more robust and scalable solutions for implementing coordination of vehicles, and, more particularly, to methods, systems, and apparatuses for implementing optimized coordination of water-based transport vessels.

The "Just-in-Time (JiT) arrival guide", issued by the International Maritime Organization (GEF-UNDP-IMO GloMEEP Project and members of the GIA, 2020: "Just In Time Arrival Guide - Barriers and Potential Solutions") discusses the port-side optimisation and planning of times of arrival of vessels at port. It is concerned with enabling speed adjustment so the ship arrives when berth, fairway and nautical services are available. A fuel optimisation and a port efficient dynamic handling is therefore sought. In this sense, it represents the closest background art to the subject matter of the present application.

### BRIEF DESCRIPTION OF THE DRAWINGS

A further understanding of the nature and advantages of particular embodiments may be realized by reference to the remaining portions of the specification and the drawings, in which like reference numerals are used to refer to similar components. In some instances, a sub-label is associated with a reference numeral to denote one of multiple similar components. When reference is made to a reference numeral without specification to an existing sub-label, it is intended to refer to all such multiple similar components.
Fig. 1 is a schematic diagram illustrating a system for implementing optimized coordination of water-based transport vessels, in accordance with various embodiments.
Fig. 2 is a schematic block flow diagram illustrating a non-limiting example of a process flow for calculating optimal course, target arrival time, and/or speed of water-based transport vessels for implementing optimized coordination of the water-based transport vessels, in accordance with various embodiments.
Fig. 3 is a schematic diagram illustrating a non-limiting example of a geographic region in which optimized coordination of water-based transport vessels may be implemented, in accordance with various embodiments.
Figs. 4A and 4B are flow diagrams illustrating a method for implementing optimized coordination of water-based transport vessels, in accordance with various embodiments.
Fig. 5 is a block diagram illustrating an exemplary computer or system hardware architecture, in accordance with various embodiments.
Fig. 6 is a block diagram illustrating a networked system of computers, computing systems, or system hardware architecture, which can be used in accordance with various embodiments.

### DETAILED DESCRIPTION OF CERTAIN EMBODIMENTS

### Overview

Various embodiments provide tools and techniques for implementing coordination of vehicles, and, more particularly, to methods, systems, and apparatuses for implementing optimized coordination of water-based transport vessels.

In various embodiments, a computing system may is adapted to receive at least two of first data, second data, or third data. The first data is data from one or more third party water-based transport vessel tracking systems and includes a location of each water-based transport vessel among a plurality of water-based transport vessels within a predetermined geographical region. In some instances, the second data is associated with each of one or more first water-based transport vessels among the plurality of water-based transport vessels and includes specific vessel-related information (including, but not limited to, at least one of position data, speed data, draft data, voyage information, on-board fuel consumption sensor data, or maintenance records, and/or the like). The third data is data from one or more satellite-based observation systems and may include relational data associated with the one or more first water-based transport vessels within the predetermined geographical region relative to each other and relative to at least one of one or more anchorage points, one or more ports, or one or more preset waiting locations that are outside the one or more anchorage points and outside the one or more ports, and/or the like. In some instances, the relational data may include, without limitation, data regarding at least one of position, vector, and proximity of the one or more first water-based transport vessels within the predetermined geographical region relative to each other and relative to the at least one of the one or more anchorage points, the one or more ports, or the one or more preset waiting locations.

The computing system is adapted to analyse the at least two of the first data, the second data, or the third data to calculate an optimal course, target arrival time, and/or speed at which a first water-based transport vessel among the one or more first water-based transport vessels should travel from its current position to a first preset waiting location among the one or more preset waiting locations. According to the various embodiments, a waiting location (also referred to herein as a "Blue Box location" or the like), which is outside the anchorage point and outside the port, may be identified based at least in part on geographical and hydrographic data associated with at least one of the nearby port or one or more anchorage points around the nearby port, and/or the like.

Calculating the optimal course, target arrival time, and/or speed at which the first water-based transport vessel among the one or more first water-based transport vessels should travel from its current position to the first preset waiting location comprises the computing system calculating the optimal course, target arrival time, and/or speed based at least in part on one or more of calculations to reduce waiting time for berthing at a nearby port while at the first preset waiting location, calculations to coordinate synchronous arrival with at least one other first water-based transport vessel, or calculations to reduce greenhouse gas ("GHG") emissions while travelling toward the waiting location, and/or the like.

The computing system is adapted to to the first water-based transport vessel, a first message containing information regarding the optimal target arrival time or the optimal speed. In some cases, the first message may comprise instructions for travelling at the optimal speed and/or for arriving at the optimal target arrival time, based on contractual obligations binding each of one or more owners or operators of the first water-based transport vessel to follow the instructions. The analysis and sending processes may be repeated for each of the other water-based transport vessels that are travelling toward the waiting location or Blue Box location. Such processes may be applied to encompass more than a single port and more than a single waiting location.

According to some aspects, the optimized coordination of water-based transport vessels (referred to herein as "Blue Visby"), when implemented, may result in optimized coordination of water-based transport vessels, minimization of wait times at waiting locations, minimization of congestion at or near ports, and/or minimization of carbon emissions, and/or the like.

These and other aspects of the optimized coordination of water-based transport vessels ("Blue Visby") are described in greater detail with respect to the figures, in the APPENDIX to this application, and in the APPENDIX of the '424 Application, each APPENDIX being incorporated herein by reference in its entirety for all purposes.

The following detailed description illustrates a few exemplary embodiments in further detail to enable one of skill in the art to practice such embodiments. The described examples are provided for illustrative purposes and are not intended to limit the scope of the invention.

In the following description, for the purposes of explanation, numerous specific details are set forth in order to provide a thorough understanding of the described embodiments. It will be apparent to one skilled in the art, however, that other embodiments of the present invention may be practiced without some of these specific details. In other instances, certain structures and devices are shown in block diagram form. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features.

Unless otherwise indicated, all numbers used herein to express quantities, dimensions, and so forth used should be understood as being modified in all instances by the term "about." In this application, the use of the singular includes the plural unless specifically stated otherwise, and use of the terms "and" and "or" means "and/or" unless otherwise indicated. Moreover, the use of the term "including," as well as other forms, such as "includes" and "included," should be considered non-exclusive. Also, terms such as "element" or "component" encompass both elements and components comprising one unit and elements and components that comprise more than one unit, unless specifically stated otherwise.

Various embodiments described herein, while embodying (in some cases) software products, computer-performed methods, and/or computer systems, represent tangible, concrete improvements to existing technological areas, including, without limitation, vehicle coordination technology, water-based transport vessel coordination technology, and/or the like. In other aspects, certain embodiments, can improve the functioning of user equipment or systems themselves (e.g., vehicle coordination systems, water-based transport vessel coordination systems, etc.), for example, by receiving, using a computing system and from one or more third party water-based transport vessel tracking systems, first data regarding a location of each water-based transport vessel among a plurality of water-based transport vessels within a predetermined geographical region; receiving, using the computing system and from each of one or more first water-based transport vessels among the plurality of water-based transport vessels, second data regarding specific vessel-related information including at least one of position data, speed data, draft data, voyage information, on-board fuel consumption sensor data, or maintenance records; receiving, using the computing system and from one or more satellite-based observation systems, third data regarding at least one of position, vector, and proximity of the one or more first water-based transport vessels within the predetermined geographical region relative to each other and relative to at least one of one or more anchorage points, one or more ports, or one or more preset waiting locations that are outside the one or more anchorage points and outside the one or more ports; analyzing, using the computing system, at least two of the first data, the second data, or the third data to calculate a corresponding optimal speed at which each first water-based transport vessel among the one or more first water-based transport vessels should travel along a corresponding first course from its current position to a corresponding first preset waiting location among the one or more preset waiting locations at the corresponding optimal target arrival time, based at least in part on one or more of calculations to reduce waiting time for berthing at a nearby port while at the corresponding first preset waiting location, calculations to coordinate synchronous arrival with at least one other first water-based transport vessel, or calculations to reduce greenhouse gas emissions while travelling along the first course; and sending, using the computing system and to each first water-based transport vessel, a message and instructions containing information regarding the corresponding optimal speed and/or the like.

In particular, to the extent any abstract concepts are present in the various embodiments, those concepts can be implemented as described herein by devices, software, systems, and methods that involve specific novel functionality (e.g., steps or operations), such as, by minimizing wait times by identifying appropriate waiting locations or Blue Box locations that serve as the arrival or destination target for all water-based transport vessels destined from the nearby port instead of the conventional (and typically congested) anchorage points, by calculating the optimal course, target arrival time, and/or speed for each water-based transport vessel heading toward port (and thus ultimately instructed to head toward waiting location or Blue Box location, in accordance with the various embodiments), by calculating how to reduce waiting time for berthing at a nearby port while at the first preset waiting location, by calculating how to coordinate synchronous arrival with at least one other first water-based transport vessel, and/or by calculating how to reduce greenhouse gas ("GHG") emissions while travelling toward the waiting location (where academic research suggests that for every knot that service speeds of water-based transport that is reduced, carbon dioxide (CO₂) savings of about 10-20% can be achieved, despite taking into account longer transit times at lower speeds; also the laws of hydrodynamics dictate that for every one unit of a ship's speed that is reduced, three units of fuel may be saved), and/or the like. and/or the like, to name a few examples, that extend beyond mere conventional computer processing operations. These functionalities can produce tangible results outside of the implementing computer system, including, merely by way of example, optimized coordination of water-based transport vessels, minimization of wait times at waiting locations, minimization of congestion at or near ports, minimization of carbon emissions, and/or the like, at least some of which may be observed or measured by customers and/or service providers.

A method according to the embodiments comprises receiving, using a computing system and from one or more third party water-based transport vessel tracking systems, first data regarding a location of each water-based transport vessel among a plurality of water-based transport vessels within a predetermined geographical region; receiving, using the computing system and from each of one or more first water-based transport vessels among the plurality of water-based transport vessels, second data regarding specific vessel-related information including at least one of position data, speed data, draft data, voyage information, on-board fuel consumption sensor data, or maintenance records; and receiving, using the computing system and from one or more satellite-based observation systems, third data regarding at least one of position, vector, and proximity of the one or more first water-based transport vessels within the predetermined geographical region relative to each other and relative to at least one of one or more anchorage points, one or more ports, or one or more preset waiting locations that are outside the one or more anchorage points and outside the one or more ports.

The method also comprises analyzing, using the computing system, at least two of the first data, the second data, or the third data to calculate a corresponding optimal speed at which each first water-based transport vessel among the one or more first water-based transport vessels should travel along a corresponding first course from its current position to a corresponding first preset waiting location among the one or more preset waiting locations at the corresponding optimal target arrival time, based at least in part on one or more of calculations to reduce waiting time for berthing at a nearby port while at the corresponding first preset waiting location, calculations to coordinate synchronous arrival with at least one other first water-based transport vessel, or calculations to reduce greenhouse gas emissions while travelling along the first course. The method may further comprise sending, using the computing system and to each first water-based transport vessel, a message and instructions containing information regarding the corresponding optimal speed and target arrival time.

According to the embodiments, a method comprises receiving, using a computing system, at least two of first data, second data, or third data, wherein the first data is data from one or more third party water-based transport vessel tracking systems and includes a location of each water-based transport vessel among a plurality of water-based transport vessels within a predetermined geographical region, wherein the second data is data associated with each of one or more first water-based transport vessels among the plurality of water-based transport vessels and includes specific vessel-related information, and wherein the third data is data from one or more satellite-based observation systems and includes relational data associated with the one or more first water-based transport vessels within the predetermined geographical region relative to each other and relative to at least one of one or more anchorage points, one or more ports, or one or more preset waiting locations that are outside the one or more anchorage points and outside the one or more ports. The method may further comprise analyzing, using the computing system, the at least two of the first data, the second data, or the third data to calculate an optimal speed at which a first water-based transport vessel among the one or more first water-based transport vessels should travel along a first course from its current position to a first preset waiting location among the one or more preset waiting locations at the corresponding optimal target arrival time; and sending, using the computing system and to the first water-based transport vessel, a first message containing information regarding the optimal speed and target arrival time.

In accordance to the embodiments, the computing system comprises one of a water-based transport vessel coordination system, a server computer over a network, a cloud-based computing system over a network, or a distributed computing system, and/or the like. In some cases, the one or more third party water-based transport vessel tracking systems may comprise one or more of an automatic identification system ("AIS"), an Earth observation satellite-based vessel tracking system, a vessel traffic services ("VTS") system, a marine radar system, a harbormaster system, or a coast guard system, and/or the like. In some instances, the specific vessel-related information may comprise at least one of position data, speed data, draft data, voyage information, on-board fuel consumption sensor data, or maintenance records, and/or the like. In some cases, the relational data may comprise data regarding at least one of position, vector, and proximity of the one or more first water-based transport vessels within the predetermined geographical region relative to each other and relative to the at least one of the one or more anchorage points, the one or more ports, or the one or more preset waiting locations, and/or the like. In some instances, the method may further comprise analyzing, using the computing system, image or video data from the third data from the one or more satellite-based observation systems to generate the relational data.

According to some embodiments, calculating the optimal speed at which the first water-based transport vessel among the one or more first water-based transport vessels should travel along the first course from its current position to the first preset waiting location at the corresponding optimal target arrival time may comprise calculating, using the computing system, the optimal speed based at least in part on one or more of calculations to arrive at the optimal target arrival time and to reduce waiting time for berthing at a nearby port while at the first preset waiting location, calculations to coordinate synchronous arrival with at least one other first water-based transport vessel, or calculations to reduce greenhouse gas emissions while travelling along the first course, and/or the like.

In some embodiments, the first message may comprise instructions for travelling at the optimal speed, based on contractual obligations binding each of one or more owners or operators of the first water-based transport vessel to follow the instructions. According to some embodiments, receiving the at least two of first data, second data, or third data, analyzing the at least two of the first data, the second data, or the third data to calculate the optimal speed, and sending the first message are performed dynamically in real-time or near-real-time.

Merely by way of example, in some cases, the method may further comprise analyzing, using the computing system, the at least two of the first data, the second data, or the third data to calculate a corresponding optimal course and speed for each of two or more second water-based transport vessels among the one or more first water-based transport vessels within the predetermined geographical region to coordinate arrival at a second preset waiting location among the one or more preset waiting locations at an optimal target arrival time; and sending, using the computing system and to each second water-based transport vessel, a second message containing information regarding the corresponding optimal course, target arrival time, and/or speed. In some instances, calculating the corresponding optimal course, target arrival time, and/or speed for each of two or more second water-based transport vessels to coordinate arrival at the second preset waiting location may comprise calculating, using the computing system, each corresponding optimal course, target arrival time, and/or speed based at least in part on one or more of calculations to reduce waiting time for berthing at a nearby port while at the second preset waiting location, calculations to coordinate synchronous arrival of all of the two or more second water-based transport vessels, or calculations to reduce greenhouse gas emissions while travelling to the second preset waiting location, and/or the like. In some cases, the second message may comprise instructions for travelling at the corresponding optimal course and speed to arrive at the corresponding target arrival time, based on contractual obligations binding corresponding each of one or more owners or operators of a corresponding one of the two or more second water-based transport vessel to follow the instructions.

In some embodiments, the method may further comprise identifying, using the computing system, a preset waiting location among the one or more preset waiting locations based at least in part on geographical and hydrographic data associated with at least one of a nearby port or one or more anchorage points around the nearby port.

In yet another aspect, a system might comprise a computing system, which might comprise at least one first processor and a first non-transitory computer readable medium communicatively coupled to the at least one first processor. The first non-transitory computer readable medium might have stored thereon computer software comprising a first set of instructions that, when executed by the at least one first processor, causes the computing system to: receive at least two of first data, second data, or third data, wherein the first data is data from one or more third party water-based transport vessel tracking systems and includes a location of each water-based transport vessel among a plurality of water-based transport vessels within a predetermined geographical region, wherein the second data is data associated with each of one or more first water-based transport vessels among the plurality of water-based transport vessels and includes specific vessel-related information, and wherein the third data is data from one or more satellite-based observation systems and includes relational data associated with the one or more first water-based transport vessels within the predetermined geographical region relative to each other and relative to at least one of one or more anchorage points, one or more ports, or one or more preset waiting locations that are outside the one or more anchorage points and outside the one or more ports; analyze the at least two of the first data, the second data, or the third data to calculate an optimal speed at which a first water-based transport vessel among the one or more first water-based transport vessels should travel along a first course from its current position to a first preset waiting location among the one or more preset waiting locations at the corresponding optimal target arrival time; and send, to the first water-based transport vessel, a first message containing information regarding the optimal speed.

In accordance to the embodiments, the computing system comprises one of a water-based transport vessel coordination system, a server computer over a network, a cloud-based computing system over a network, or a distributed computing system, and/or the like. In some cases, calculating the optimal speed at which the first water-based transport vessel among the one or more first water-based transport vessels should travel along the first course from its current position to the first preset waiting location may comprise using the computing system, the optimal speed based at least in part on one or more of calculations to arrive at the corresponding optimal target arrival time to reduce waiting time for berthing at a nearby port while at the first preset waiting location, calculations to coordinate synchronous arrival with at least one other first water-based transport vessel, or calculations to reduce greenhouse gas emissions while travelling along the first course, and/or the like. In some instances, the first message may comprise instructions for travelling at the optimal speed, based on contractual obligations binding each of one or more owners or operators of the first water-based transport vessels to follow the instructions. In some instances, receiving the at least two of first data, second data, or third data, analyzing the at least two of the first data, the second data, or the third data to calculate the optimal speed and/or the optimal target arrival time, and sending the first message are performed dynamically in real-time or near-real-time.

In some embodiments, the first set of instructions, when executed by the at least one first processor, may further cause the computing system to: analyze the at least two of the first data, the second data, or the third data to calculate a corresponding optimal course, target arrival time, and/or speed for each of two or more second water-based transport vessels among the one or more first water-based transport vessels within the predetermined geographical region to coordinate arrival at a second preset waiting location among the one or more preset waiting locations; and send, to each second water-based transport vessel, a second message containing information regarding the corresponding optimal course, target arrival time, and/or speed.

### Specific Exemplary Embodiments

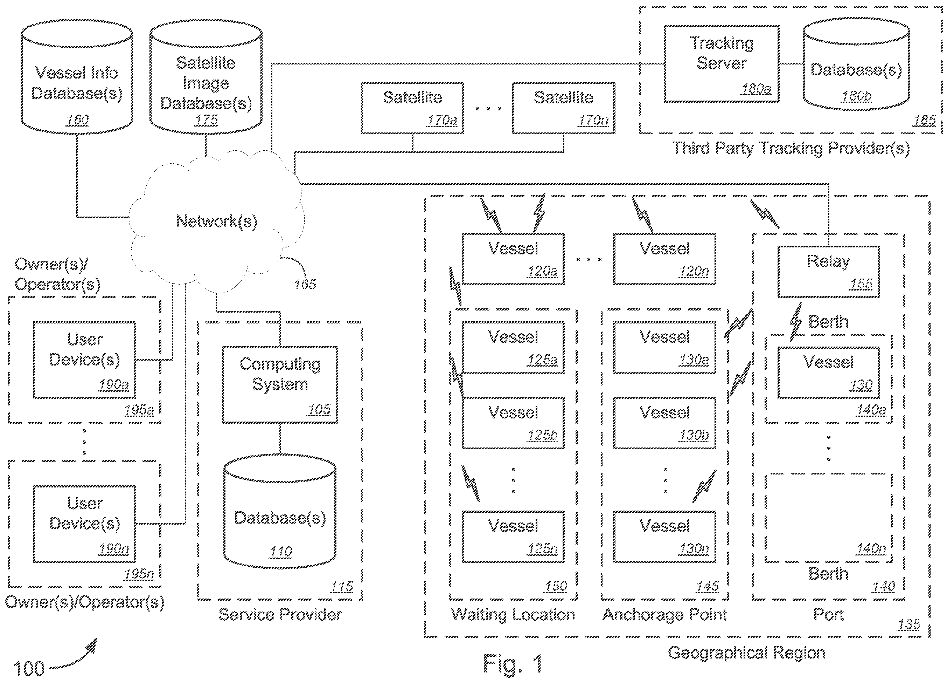

We now turn to the embodiments as illustrated by the drawings. Figs. 1-6 illustrate some of the features of the method, system, and apparatus for implementing coordination of vehicles, and, more particularly, to methods, systems, and apparatuses for implementing optimized coordination of water-based transport vessels, as referred to above. The methods, systems, and apparatuses illustrated by Figs. 1-6 refer to examples of different embodiments that include various components and steps, which can be considered alternatives or which can be used in conjunction with one another in the various embodiments. The description of the illustrated methods, systems, and apparatuses shown in Figs. 1-6 is provided for purposes of illustration and should not be considered to limit the scope of the different embodiments.

With reference to the figures, Fig. 1 is a schematic diagram illustrating a system 100 for implementing optimized coordination of water-based transport vessels, in accordance with various embodiments.

In the non-limiting embodiment of Fig. 1, system 100 may comprise computing system 105 and corresponding database(s) 110 that are associated with service provider 115. System 100 may further comprise one or more water-based transport vessels 120a-120n (collectively, "vessels 120" or the like), one or more water-based transport vessels 125a-125n (collectively, "vessels 125" or the like), one or more water-based transport vessels 130a-130n (collectively, "vessels 130" or the like), and water-based transport vessel 130 that may be located at geographical region 135. In some cases, the water-based transport vessel 130 may be anchored or berthed at berth 140a (among berths 140a-140n) of port 140, while the one or more vessels 130a-130n may be anchored at anchorage point 145, and the one or more vessels 125a-125n may be anchored at waiting location or "Blue Box" location 150, while the one or more vessels 120a-120n may be headed toward the waiting location or "Blue Box" location 150. Each of these vessels 120-130 - which may include, without limitation, bulk cargo vessels, dry bulk vessels, tanker vessels, container vessels, and/or the like - may communicatively couple with at least one of computing system 105, vessel information database(s) 160, satellite image database(s) 175, and/or tracking server 180a via one of the following: (i) relay 155 and network(s) 165; (ii) relay 155, one or more of satellites 170a-170n, and network(s) 165; (iii) one or more of satellites 170a-170n and network(s) 165; and/or the like. Herein, wireless communications may be denoted by the lightning bolt symbols, although line connections may denote either wireless or wired communications. The tracking server 180a and corresponding database(s) 180b may be associated with third party tracking provider(s) 185, while user devices 190a-190n may be respectively associated with corresponding owners and/or operators 195a-195n of each of the vessels 120-130.

According to some embodiments, network(s) 165 may each include, without limitation, one of a local area network ("LAN"), including, without limitation, a fiber network, an Ethernet network, a Token-Ring^{™} network, and/or the like; a wide-area network ("WAN"); a wireless wide area network ("WWAN"); a virtual network, such as a virtual private network ("VPN"); the Internet; an intranet; an extranet; a public switched telephone network ("PSTN"); an infra-red network; a wireless network, including, without limitation, a network operating under any of the IEEE 802.11 suite of protocols, the Bluetooth^{™} protocol known in the art, and/or any other wireless protocol; and/or any combination of these and/or other networks. In a particular embodiment, the network(s) 165 may include an access network of an Internet service provider ("ISP"). In another embodiment, the network(s) 165 may include a core network of the ISP and/or the Internet.

In some embodiments, the computing system 105 may include, without limitation, one of a water-based transport vessel coordination system, a server computer over a network, a cloud-based computing system over a network, or a distributed computing system, and/or the like. In some instances, the one or more third party water-based transport vessel tracking systems or tracking server 180a may include, but are not limited to, one or more of an automatic identification system ("AIS"), an Earth observation satellite-based vessel tracking system, a vessel traffic services ("VTS") system, a marine radar system, a harbormaster system, or a coast guard system, and/or the like. The computing system 105 may also integrate with electronic chart display and information system ("ECDIS") that may be used for navigation by one or more vessels 120-130.

In operation, computing system 105 may receive at least two of first data, second data, or third data. In some cases, the first data may be data from one or more third party water-based transport vessel tracking systems (in this case, tracking server 180a, or the like) and may include a location of each water-based transport vessel among a plurality of water-based transport vessels (in this case, vessels 120-130, or the like) within a predetermined geographical region (in this case, geographical region 135). In some instances, the second data may be data associated with each of one or more first water-based transport vessels among the plurality of water-based transport vessels and may include specific vessel-related information (including, but not limited to, at least one of position data, speed data, draft data (e.g., data regarding the distance between the waterline and the deepest point of the vessel, or the like), voyage information, on-board fuel consumption sensor data, or maintenance records, and/or the like). In some cases, the third data may be data from one or more satellite-based observation systems and may include relational data associated with the one or more first water-based transport vessels within the predetermined geographical region 135 relative to each other and relative to at least one of one or more anchorage points (in this case, anchorage point 145), one or more ports (in this case, port 140), or one or more preset waiting locations that are outside the one or more anchorage points and outside the one or more ports (in this case, waiting location or Blue Box location 150), and/or the like. In some instances, the relational data may include, without limitation, data regarding at least one of position, vector, and proximity of the one or more first water-based transport vessels within the predetermined geographical region relative to each other and relative to the at least one of the one or more anchorage points, the one or more ports, or the one or more preset waiting locations.

The computing system 105 may analyze the at least two of the first data, the second data, or the third data to calculate an optimal course, target arrival time, and/or speed at which a first water-based transport vessel among the one or more first water-based transport vessels (in this case, vessel 120 among vessels 120a-120n) should travel from its current position to a first preset waiting location (in this case, waiting location or Blue Box location 150) among the one or more preset waiting locations. According to the various embodiments, a waiting location 150 (also referred to herein as a "Blue Box location" or the like), which is outside the anchorage point 145 and outside the port 140, may be identified based at least in part on geographical and hydrographic data associated with at least one of the nearby port (in this case, port 140) or one or more anchorage points around the nearby port (in this case, anchorage point 145), and/or the like.

In some instances, calculating the optimal course, target arrival time, and/or speed at which the first water-based transport vessel among the one or more first water-based transport vessels should travel from its current position to the first preset waiting location may comprise the computing system 105 calculating the optimal course, target arrival time, and/or speed based at least in part on one or more of calculations to reduce waiting time for berthing at a nearby port (in this case, port 140) while at the first preset waiting location (in this case, waiting location 150), calculations to coordinate synchronous arrival with at least one other first water-based transport vessel, or calculations to reduce greenhouse gas ("GHG") emissions while travelling toward the waiting location, and/or the like.

The computing system 105 may then send, to the first water-based transport vessel, a first message containing information regarding the optimal speed and/or optimal target arrival time. In some cases, the first message may comprise instructions for travelling at the optimal speed, based on contractual obligations binding each of one or more owners or operators of the first water-based transport vessel to follow the instructions. The analysis and sending processes may be repeated for each of the other water-based transport vessels 120a-120n that are travelling toward the waiting location or Blue Box location 150. Such processes may be applied to encompass more than a single port and more than a single waiting location.

According to the various embodiments, waiting location or Blue Box location 150 may be identified and selected as a destination instead of anchorage point 145 because convention anchorage points are typical congestion hotspots at which water-based transport vessels following convention "Sail Fast, Then Wait" ("SFTW") operational model congregate. In some instances, the precise location of each Blue Box location 150 may take into account geographical and hydrographic data, and may be incorporated into ECDIS electronic charts, or the like. The various embodiments serve to minimize wait times by identifying appropriate waiting locations or Blue Box locations that serve as the arrival or destination target for all water-based transport vessels destined from the nearby port (in this case, port 140) instead of the conventional (and typically congested) anchorage points, by calculating the optimal course, target arrival time, and/or speed for each water-based transport vessel 120 heading toward port 140 (and thus ultimately instructed to head toward waiting location or Blue Box location 150, in accordance with the various embodiments), by calculating how to reduce waiting time for berthing at a nearby port (in this case, port 140) while at the first preset waiting location (in this case, waiting location 150), by calculating how to coordinate synchronous arrival with at least one other first water-based transport vessel, and/or by calculating how to reduce greenhouse gas ("GHG") emissions while travelling toward the waiting location (where academic research suggests that for every knot that service speeds of water-based transport that is reduced, carbon dioxide (CO₂) savings of about 10-20% can be achieved, despite taking into account longer transit times at lower speeds; also the laws of hydrodynamics dictate that for every one unit of a ship's speed that is reduced, three units of fuel may be saved), and/or the like.

In some aspects, the computing system 105 may recommend optimal arrival times that will be based on speeds for each vessel that will be slower than their service speed, resulting in the reduction of fuel consumption and, hence, reduction in GHG. In addition, the computing system 105 may take into account vessel-specific factors, in order to arrive at the environmentally optimal speed for each particular vessel at any particular stage of the voyage (referred to herein as "Blue Speed"). In some instances, these factors may include, without limitation, at least one of characteristics of each vessel (e.g., as published by the Classification Societies, or the like), length of stay at anchorage in warm waters (which increases the risk of hull fouling, which in turn increases hydrodynamic resistance and affects a ship's environmentally optimal speed, or the like), length of time since the vessel's last dry docking (at which time a vessel's hull is typically sandblasted, with hull coatings re-applied and engines overhauled - all leading to improved performance), and/or real-time fuel consumption data from on-board sensors of each vessel (in some cases, deploying Internet of Things technologies, or the like), and/or the like.

In some embodiments, the computing system 105 may allocate speeds to each vessel steaming towards a particular port on the basis that their arrival into the Blue Box in sequence that (a) takes into account the congestion at the anchorage and (b) retains the order in which the vessels would have arrived if they had each steamed at their respective service speeds. In this manner, the computing system 105 may assist ports to optimize their operations (particularly, with respect to the port's likely berthing optimization problem, which may depend largely on shore-side factors and which may regardless be side-stepped at least in part by the various embodiments implemented by the computing system). The computing system 105 may monitor conditions at each port, so as to sequence the arrival of steaming vessels into the Blue Box, in a way so that the arriving vessels proceed and wait at the anchorage for as short a period as possible. In accordance to the invention, the computing system 105 will not alter the sequence of the arrival of vessels into the Blue Box, but will only amend the timing of each arrival, and intervals between each arrival. Upon each vessel sailing from each departure port towards another (destination) port, the computing system may calculate the time the vessel would have arrived if it had steamed at its service speed (e.g., its "Waiting Estimated Time of Arrival" or "W/ETA" or the like). In light of the information about other vessels destined for the same (destination) port, the computing system may produce an estimated arrival sequence, essentially a queue number as if the vessel were joining a queue for entry into the port, except that the computing system may allocate that queue number not for port entry, but for arrival in the Blue Box (e.g., "Blue Box Queue [number]" or "BQ[number]" or the like). In light of congestion conditions, the computing system may apply one or more algorithms and may produce a different target time for arrival into the Blue Box (e.g., "Blue Estimated Time of Arrival" or "B/ETA" or the like), always retaining a vessel's BQ number. Neither the BQ number nor B/ETA nor Blue Speed will be static. Their values will change dynamically, as the computing system continually monitors conditions, including, but not limited to, more vessels steam to the same port from a shorter distance, problems causing delays to vessels, or worsening or improving congestion at port, and/or the like.

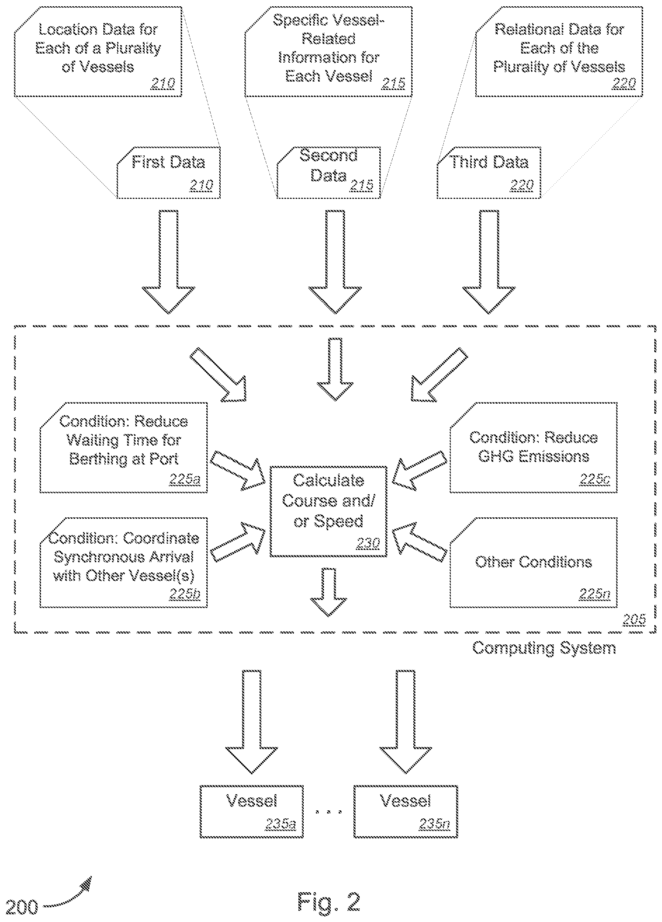

These and other functions of the system 100 (and its components) are described in greater detail below with respect to Figs. 2-4.

Fig. 2 is a schematic block flow diagram illustrating a non-limiting example 200 of a process flow for calculating optimal course, target arrival time, and/or speed of water-based transport vessels for implementing optimized coordination of the water-based transport vessels, in accordance with various embodiments.

As shown in the non-limiting embodiment 200 of Fig. 2, a computing system 205 may receive at least two of first data 210, second data 215, or third data 220 (as depicted in Fig. 2 by an arrow from each the first data 210, the second data 215, and the third data 220 to the computing system 205). In some cases, the first data 205 may be data from one or more third party water-based transport vessel tracking systems and may include location data for each water-based transport vessel among a plurality of water-based transport vessels within a predetermined geographical region. In some instances, the second data 215 may be data associated with each of one or more first water-based transport vessels among the plurality of water-based transport vessels and may include specific vessel-related information (including, but not limited to, at least one of position data, speed data, draft data, voyage information, on-board fuel consumption sensor data, or maintenance records, and/or the like) for each vessel. In some cases, the third data 220 may be data from one or more satellite-based observation systems and may include relational data associated with the one or more first water-based transport vessels within the predetermined geographical region relative to each other and relative to at least one of one or more anchorage points, one or more ports, or one or more preset waiting locations that are outside the one or more anchorage points and outside the one or more ports, and/or the like. In some instances, the relational data may include, without limitation, data regarding at least one of position, vector, and proximity of the one or more first water-based transport vessels within the predetermined geographical region relative to each other and relative to the at least one of the one or more anchorage points, the one or more ports, or the one or more preset waiting locations.

The computing system 205 may analyze the at least two of the first data, the second data, or the third data to calculate an optimal course, target arrival time, and/or speed (at block 230) at which a water-based transport vessel(s) among the one or more first water-based transport vessels should travel from its current position to a first preset waiting location among the one or more preset waiting locations. In some instances, calculating the optimal course, target arrival time, and/or speed at which the first water-based transport vessel among the one or more first water-based transport vessels should travel from its current position to the first preset waiting location may comprise calculating, using the computing system, the optimal course, target arrival time, and/or speed based at least in part on one or more conditions (denoted in Fig. 2 by arrows from the conditions 225a-225n to the calculation block 230). According to some embodiments, the one or more conditions may include, without limitation, at least one of reducing waiting time for berthing at a nearby port (block 225a) while at the first preset waiting location, coordinating synchronous arrival with at least one other water-based transport vessel(s) (block 225b), reducing greenhouse gas ("GHG") emissions while travelling toward the waiting location (block 225c), or other conditions (block 225n), and/or the like.

The computing system 205 may then send, to the water-based transport vessel(s) 235a-235n, a first message containing information regarding the optimal speed (denoted in Fig. 2 by the arrows from the computing system 205 to the vessels 235a-235n). In some cases, the first message may comprise instructions for travelling at the optimal speed along the optimal course and speed to arrive at the corresponding target arrival time, based on contractual obligations binding each of one or more owners or operators of the water-based transport vessel(s) to follow the instructions.

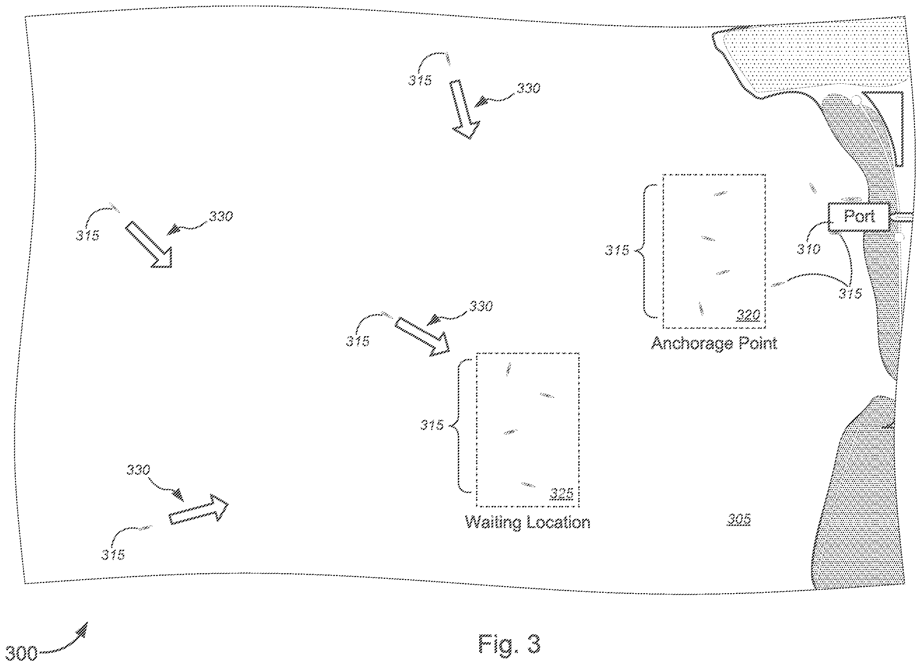

Fig. 3 is a schematic diagram illustrating a non-limiting example 300 of a geographic region 305 in which optimized coordination of water-based transport vessels may be implemented, in accordance with various embodiments.

In the non-limiting embodiment of Fig. 3, a port 310 (with a plurality of berths, not shown) is depicted located in geographical region 305. Among a plurality of water-based transport vessels 315 - which may include, without limitation, bulk cargo vessels, dry bulk vessels, tanker vessels, container vessels, and/or the like - some may be berthed at the port 310, while some may be anchored at the anchorage point 320 waiting to be berthed. According to the various embodiments, a waiting location 325 (also referred to herein as a "Blue Box location" or the like), which is outside the anchorage point 320 and outside the port 310, may be identified based at least in part on geographical and hydrographic data associated with at least one of the nearby port (in this case, port 310) or one or more anchorage points around the nearby port (in this case, anchorage point 320), and/or the like.

The system may track one or more water-based transport vessels 315 whose destination is port 310, by receiving at least two of first data, second data, or third data. In some cases, the first data may be data from one or more third party water-based transport vessel tracking systems and may include a location of each water-based transport vessel among a plurality of water-based transport vessels 315 within a predetermined geographical region (in this case, geographical region 305). In some instances, the second data may be data associated with each of one or more first water-based transport vessels among the plurality of water-based transport vessels 315 and may include specific vessel-related information (including, but not limited to, at least one of position data, speed data, draft data, voyage information, on-board fuel consumption sensor data, or maintenance records, and/or the like). In some cases, the third data may be data from one or more satellite-based observation systems and may include relational data associated with the one or more first water-based transport vessels 315 within the predetermined geographical region 305 relative to each other 315 and relative to at least one of one or more anchorage points (in this case, anchorage point 320), one or more ports (in this case, port 310), or one or more preset waiting locations that are outside the one or more anchorage points and outside the one or more ports (in this case, waiting location or Blue Box location 325), and/or the like. In some instances, the relational data may include, without limitation, data regarding at least one of position, vector, and proximity of the one or more first water-based transport vessels within the predetermined geographical region relative to each other and relative to the at least one of the one or more anchorage points, the one or more ports, or the one or more preset waiting locations.

The system may analyze the at least two of the first data, the second data, or the third data to calculate an optimal course, target arrival time, and/or speed at which a first water-based transport vessel among the one or more first water-based transport vessels should travel from its current position to a first preset waiting location (in this case, waiting location or Blue Box location 325) among the one or more preset waiting locations. Herein, the optimal course, target arrival time, and/or speed is denoted in Fig. 3 by the arrow 330 in front of each water-based transport vessel 315 in geographical region 305 that is travelling toward the waiting location 325. In some instances, calculating the optimal course, target arrival time, and/or speed at which the first water-based transport vessel among the one or more first water-based transport vessels should travel from its current position to the first preset waiting location may comprise calculating, using the computing system, the optimal course, target arrival time, and/or speed based at least in part on one or more of calculations to reduce waiting time for berthing at a nearby port (in this case, port 310) while at the first preset waiting location (in this case, waiting location 325), calculations to coordinate synchronous arrival with at least one other first water-based transport vessel, or calculations to reduce greenhouse gas emissions while travelling toward the waiting location, and/or the like.

The system may then send, to the first water-based transport vessel, a first message containing information regarding the optimal speed and/or optimal target arrival time. In some cases, the first message may comprise instructions for travelling at the optimal speed, based on contractual obligations binding each of one or more owners or operators of the first water-based transport vessel to follow the instructions. The analysis and sending processes may be repeated for each of the other water-based transport vessels 315 that are travelling toward the waiting location 325. Such processes may be applied to encompass more than a single port and more than a single waiting location.

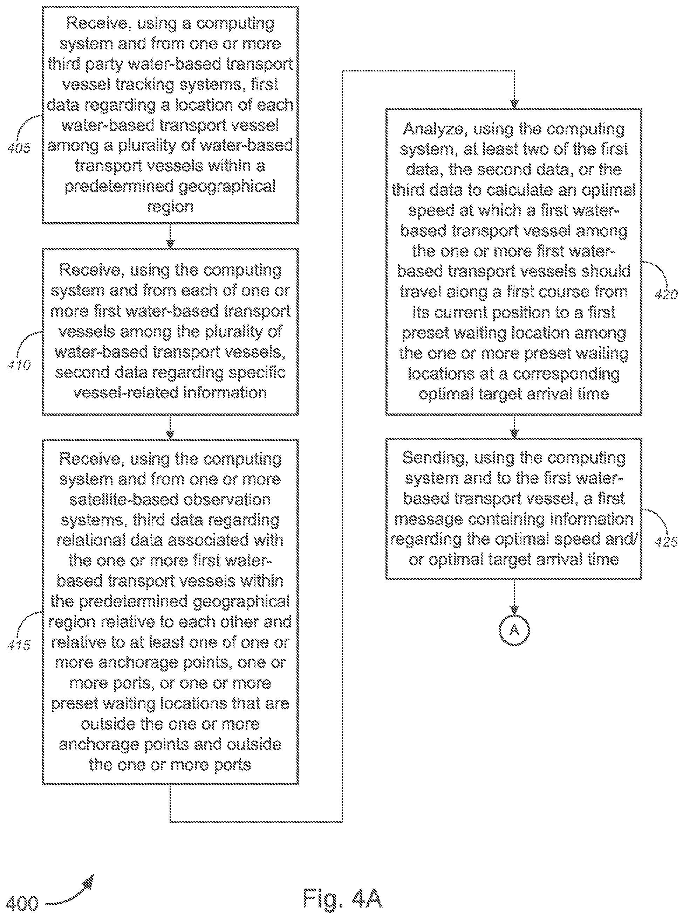

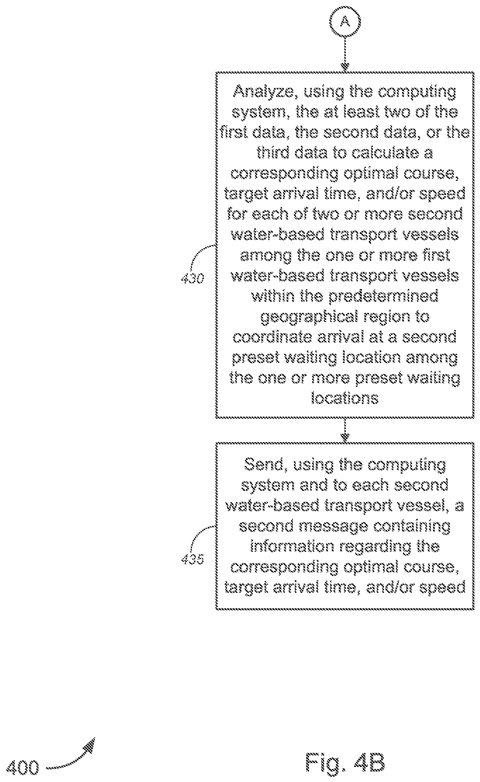

Figs. 4A and 4B (collectively, "Fig. 4") are flow diagrams illustrating a method 400 for implementing optimized coordination of water-based transport vessels, in accordance with various embodiments. Method 400 of Fig. 4A continues onto Fig. 4B following the circular marker denoted, "A."

While the techniques and procedures are depicted and/or described in a certain order for purposes of illustration, it should be appreciated that certain procedures may be reordered and/or omitted within the scope of various embodiments. Moreover, while the method 400 illustrated by Fig. 4 can be implemented by or with (and, in some cases, are described below with respect to) the systems, examples, or embodiments 100, 200, and 300 of Figs. 1, 2, and 3, respectively (or components thereof), such methods may also be implemented using any suitable hardware (or software) implementation. Similarly, while each of the systems, examples, or embodiments 100, 200, and 300 of Figs. 1, 2, and 3, respectively (or components thereof), can operate according to the method 400 illustrated by Fig. 4 (e.g., by executing instructions embodied on a computer readable medium), the systems, examples, or embodiments 100, 200, and 300 of Figs. 1, 2, and 3 can each also operate according to other modes of operation and/or perform other suitable procedures.

In the non-limiting embodiment of Fig. 4A, method 400, at block 405, may comprise receiving, using a computing system and from one or more third party water-based transport vessel tracking systems, first data regarding a location of each water-based transport vessel among a plurality of water-based transport vessels within a predetermined geographical region. In some embodiments, the computing system may include, without limitation, one of a water-based transport vessel coordination system, a server computer over a network, a cloud-based computing system over a network, or a distributed computing system, and/or the like. In some instances, the one or more third party water-based transport vessel tracking systems may include, but are not limited to, one or more of an automatic identification system ("AIS"), an Earth observation satellite-based vessel tracking system, a vessel traffic services ("VTS") system, a marine radar system, a harbormaster system, or a coast guard system, and/or the like.

At block 410, method 400 may comprise receiving, using the computing system and from (or associated with) each of one or more first water-based transport vessels among the plurality of water-based transport vessels, second data regarding specific vessel-related information. In some cases, the specific vessel-related information may include, without limitation, at least one of position data, speed data, draft data, voyage information, on-board fuel consumption sensor data, or maintenance records, and/or the like.

Method 400 may further comprise, at block 415, receiving, using the computing system and from one or more satellite-based observation systems, third data regarding relational data associated with the one or more first water-based transport vessels within the predetermined geographical region relative to each other and relative to at least one of one or more anchorage points, one or more ports, or one or more preset waiting locations (referred to herein as "Blue Box locations") that are outside the one or more anchorage points and outside the one or more ports. In some instances, the relational data may include, but is not limited to, data regarding at least one of position, vector, and proximity of the one or more first water-based transport vessels within the predetermined geographical region relative to each other and relative to the at least one of the one or more anchorage points, the one or more ports, or the one or more preset waiting locations, and/or the like. In some cases, the computing system may analyze image or video data from the third data from the one or more satellite-based observation systems to generate the relational data.

According to some embodiments, the computing system might receive all three of the first data (at block 405), the second data (at block 410), and the third data (at block 415). Alternatively, the computing system may receive at least two of the first data (at block 405), the second data (at block 410), or the third data (at block 415). In some instances, receiving the at least two of first data, second data, or third data, analyzing the at least two of the first data, the second data, or the third data to calculate the optimal speed and/or optimal target arrival time, and sending the first message may be performed dynamically in real-time or near-real-time.

Method 400, at block 420, may comprise analyzing, using the computing system, at least two of the first data, the second data, or the third data to calculate an optimal speed at which a first water-based transport vessel among the one or more first water-based transport vessels should travel along a first course from its current position to a first preset waiting location among the one or more preset waiting locations at a corresponding optimal target arrival time. In some instances, calculating the optimal speed at which the first water-based transport vessel among the one or more first water-based transport vessels should travel along the first course from its current position to the first preset waiting location may comprise calculating, using the computing system, the optimal speed and/or optimal target arrival time based at least in part on one or more of calculations to reduce waiting time for berthing at a nearby port while at the first preset waiting location, calculations to coordinate synchronous arrival with at least one other first water-based transport vessel, or calculations to reduce greenhouse gas emissions while travelling along the first course, and/or the like. In some embodiments, the first preset waiting location may be identified, by the computing system, based at least in part on geographical and hydrographic data associated with at least one of a nearby port or one or more anchorage points around the nearby port.

Method 400 may further comprise sending, using the computing system and to the first water-based transport vessel, a first message containing information regarding the optimal speed and/or optimal target arrival time (block 425). In some cases, the first message may comprise instructions for travelling at the optimal speed (to arrive at the optimal target arrival time), based on contractual obligations binding each of one or more owners or operators of the first water-based transport vessel to follow the instructions.

Method 400 may continue onto the process at block 430 in Fig. 4B following the circular marker denoted, "A."

At block 430 in Fig. 4B (following the circular marker denoted, "A"), method 400 may comprise analyzing, using the computing system, the at least two of the first data, the second data, or the third data to calculate a corresponding optimal course, target arrival time, and/or speed for each of two or more second water-based transport vessels among the one or more first water-based transport vessels within the predetermined geographical region to coordinate arrival at a second preset waiting location among the one or more preset waiting locations. In some cases, the first preset waiting location and the second preset waiting location are the same location. Alternatively, the first preset waiting location and the second preset waiting location may be separate locations. Method 400, at block 435, may comprise sending, using the computing system and to each second water-based transport vessel, a second message containing information regarding the corresponding optimal course, target arrival time, and/or speed.

In some embodiments, calculating the corresponding optimal course, target arrival time, and/or speed for each of two or more second water-based transport vessels to coordinate arrival at the second preset waiting location may comprise calculating, using the computing system, each corresponding optimal course, target arrival time, and/or speed based at least in part on one or more of calculations to reduce waiting time for berthing at a nearby port while at the second preset waiting location, calculations to coordinate synchronous arrival of all of the two or more second water-based transport vessels, or calculations to reduce greenhouse gas emissions while travelling to the second preset waiting location, and/or the like. In some cases, the second message may comprise instructions for travelling at the corresponding optimal course and speed to arrive at the corresponding target arrival time, based on contractual obligations binding corresponding each of one or more owners or operators of a corresponding one of the two or more second water-based transport vessel to follow the instructions.

### Exemplary System and Hardware Implementation

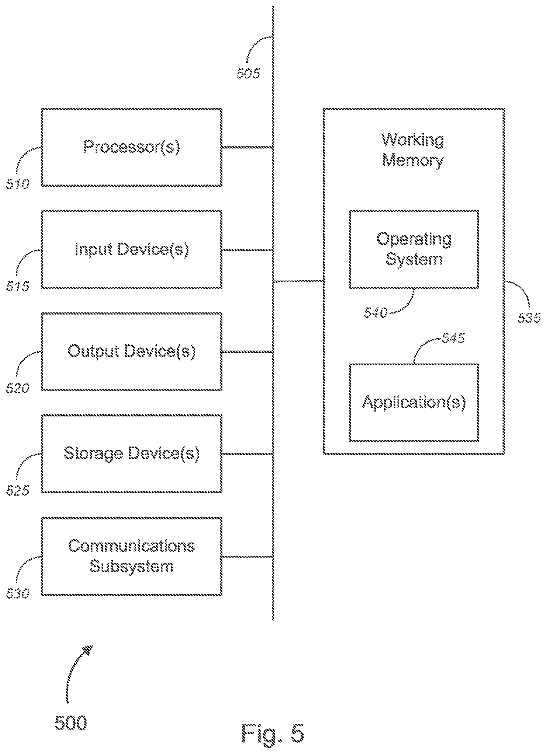

Fig. 5 is a block diagram illustrating an exemplary computer or system hardware architecture, in accordance with various embodiments. Fig. 5 provides a schematic illustration of one embodiment of a computer system 500 of the service provider system hardware that can perform the methods provided by various other embodiments, as described herein, and/or can perform the functions of computer or hardware system (i.e., computing systems 105 and 205, tracking server 180a, and user devices 190a-190n, etc.), as described above. It should be noted that Fig. 5 is meant only to provide a generalized illustration of various components, of which one or more (or none) of each may be utilized as appropriate. Fig. 5, therefore, broadly illustrates how individual system elements may be implemented in a relatively separated or relatively more integrated manner.

The computer or hardware system 500 - which might represent an embodiment of the computer or hardware system (i.e., computing systems 105 and 205, tracking server 180a, and user devices 190a-190n, etc.), described above with respect to Figs. 1-4 - is shown comprising hardware elements that can be electrically coupled via a bus 505 (or may otherwise be in communication, as appropriate). The hardware elements may include one or more processors 510, including, without limitation, one or more general-purpose processors and/or one or more special-purpose processors (such as microprocessors, digital signal processing chips, graphics acceleration processors, and/or the like); one or more input devices 515, which can include, without limitation, a mouse, a keyboard, and/or the like; and one or more output devices 520, which can include, without limitation, a display device, a printer, and/or the like.

The computer or hardware system 500 may further include (and/or be in communication with) one or more storage devices 525, which can comprise, without limitation, local and/or network accessible storage, and/or can include, without limitation, a disk drive, a drive array, an optical storage device, solid-state storage device such as a random access memory ("RAM") and/or a read-only memory ("ROM"), which can be programmable, flash-updateable, and/or the like. Such storage devices may be configured to implement any appropriate data stores, including, without limitation, various file systems, database structures, and/or the like.

The computer or hardware system 500 might also include a communications subsystem 530, which can include, without limitation, a modem, a network card (wireless or wired), an infra-red communication device, a wireless communication device and/or chipset (such as a Bluetooth^{™} device, an 802.11 device, a WiFi device, a WiMax device, a WWAN device, cellular communication facilities, etc.), and/or the like. The communications subsystem 530 may permit data to be exchanged with a network (such as the network described below, to name one example), with other computer or hardware systems, and/or with any other devices described herein. In many embodiments, the computer or hardware system 500 will further comprise a working memory 535, which can include a RAM or ROM device, as described above.

The computer or hardware system 500 also may comprise software elements, shown as being currently located within the working memory 535, including an operating system 540, device drivers, executable libraries, and/or other code, such as one or more application programs 545, which may comprise computer programs provided by various embodiments (including, without limitation, hypervisors, VMs, and the like), and/or may be designed to implement methods, and/or configure systems, provided by other embodiments, as described herein. Merely by way of example, one or more procedures described with respect to the method(s) discussed above might be implemented as code and/or instructions executable by a computer (and/or a processor within a computer); in an aspect, then, such code and/or instructions can be used to configure and/or adapt a general purpose computer (or other device) to perform one or more operations in accordance with the described methods.

A set of these instructions and/or code might be encoded and/or stored on a non-transitory computer readable storage medium, such as the storage device(s) 525 described above. In some cases, the storage medium might be incorporated within a computer system, such as the system 500. In other embodiments, the storage medium might be separate from a computer system (i.e., a removable medium, such as a compact disc, etc.), and/or provided in an installation package, such that the storage medium can be used to program, configure, and/or adapt a general purpose computer with the instructions/code stored thereon. These instructions might take the form of executable code, which is executable by the computer or hardware system 500 and/or might take the form of source and/or installable code, which, upon compilation and/or installation on the computer or hardware system 500 (e.g., using any of a variety of generally available compilers, installation programs, compression/decompression utilities, etc.) then takes the form of executable code.

It will be apparent to those skilled in the art that substantial variations may be made in accordance with specific requirements. For example, customized hardware (such as programmable logic controllers, field-programmable gate arrays, application-specific integrated circuits, and/or the like) might also be used, and/or particular elements might be implemented in hardware, software (including portable software, such as applets, etc.), or both. Further, connection to other computing devices such as network input/output devices may be employed.

As mentioned above, in one aspect, some embodiments may employ a computer or hardware system (such as the computer or hardware system 500) to perform methods in accordance with various embodiments of the invention. According to a set of embodiments, some or all of the procedures of such methods are performed by the computer or hardware system 500 in response to processor 510 executing one or more sequences of one or more instructions (which might be incorporated into the operating system 540 and/or other code, such as an application program 545) contained in the working memory 535. Such instructions may be read into the working memory 535 from another computer readable medium, such as one or more of the storage device(s) 525. Merely by way of example, execution of the sequences of instructions contained in the working memory 535 might cause the processor(s) 510 to perform one or more procedures of the methods described herein.

The terms "machine readable medium" and "computer readable medium," as used herein, refer to any medium that participates in providing data that causes a machine to operate in a specific fashion. In an embodiment implemented using the computer or hardware system 500, various computer readable media might be involved in providing instructions/code to processor(s) 510 for execution and/or might be used to store and/or carry such instructions/code (e.g., as signals). In many implementations, a computer readable medium is a non-transitory, physical, and/or tangible storage medium. In some embodiments, a computer readable medium may take many forms, including, but not limited to, non-volatile media, volatile media, or the like. Non-volatile media includes, for example, optical and/or magnetic disks, such as the storage device(s) 525. Volatile media includes, without limitation, dynamic memory, such as the working memory 535. In some alternative embodiments, a computer readable medium may take the form of transmission media, which includes, without limitation, coaxial cables, copper wire, and fiber optics, including the wires that comprise the bus 505, as well as the various components of the communication subsystem 530 (and/or the media by which the communications subsystem 530 provides communication with other devices). In an alternative set of embodiments, transmission media can also take the form of waves (including without limitation radio, acoustic, and/or light waves, such as those generated during radiowave and infra-red data communications).

Common forms of physical and/or tangible computer readable media include, for example, a floppy disk, a flexible disk, a hard disk, magnetic tape, or any other magnetic medium, a CD-ROM, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read instructions and/or code.

Various forms of computer readable media may be involved in carrying one or more sequences of one or more instructions to the processor(s) 510 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer or hardware system 500. These signals, which might be in the form of electromagnetic signals, acoustic signals, optical signals, and/or the like, are all examples of carrier waves on which instructions can be encoded, in accordance with various embodiments of the invention.

The communications subsystem 530 (and/or components thereof) generally will receive the signals, and the bus 505 then might carry the signals (and/or the data, instructions, etc. carried by the signals) to the working memory 535, from which the processor(s) 505 retrieves and executes the instructions. The instructions received by the working memory 535 may optionally be stored on a storage device 525 either before or after execution by the processor(s) 510.

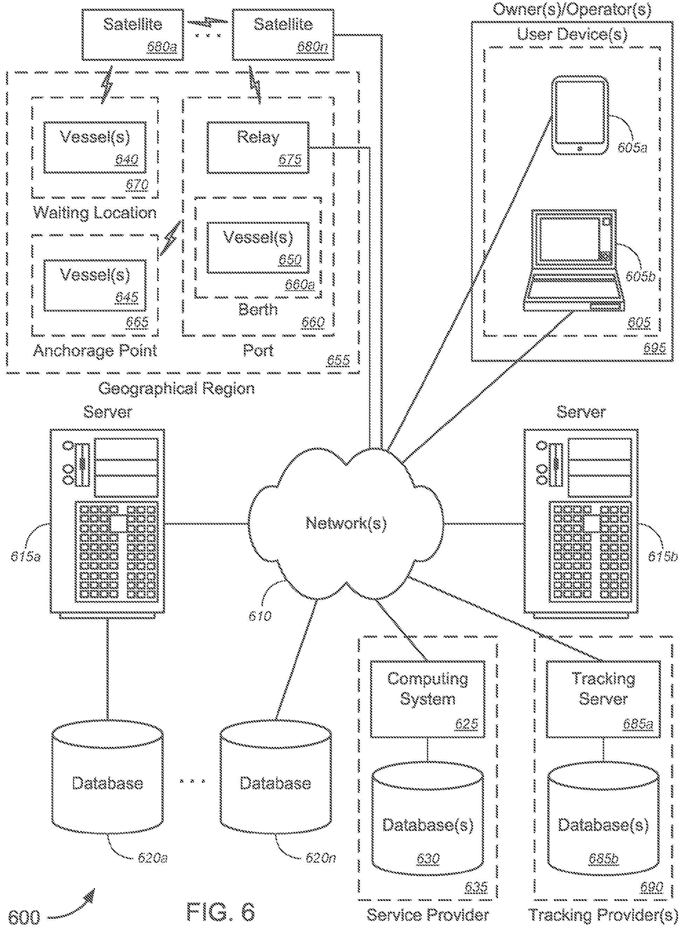

As noted above, a set of embodiments comprises methods and systems for implementing coordination of vehicles, and, more particularly, to methods, systems, and apparatuses for implementing optimized coordination of water-based transport vessels. Fig. 6 illustrates a schematic diagram of a system 600 that can be used in accordance with one set of embodiments. The system 600 can include one or more user computers, user devices, or customer devices 605. A user computer, user device, or customer device 605 can be a general purpose personal computer (including, merely by way of example, desktop computers, tablet computers, laptop computers, handheld computers, and the like, running any appropriate operating system, several of which are available from vendors such as Apple, Microsoft Corp., and the like), cloud computing devices, a server(s), and/or a workstation computer(s) running any of a variety of commercially-available UNIX^{™} or UNIX-like operating systems. A user computer, user device, or customer device 605 can also have any of a variety of applications, including one or more applications configured to perform methods provided by various embodiments (as described above, for example), as well as one or more office applications, database client and/or server applications, and/or web browser applications. Alternatively, a user computer, user device, or customer device 605 can be any other electronic device, such as a thin-client computer, Internet-enabled mobile telephone, and/or personal digital assistant, capable of communicating via a network (e.g., the network(s) 610 described below) and/or of displaying and navigating web pages or other types of electronic documents. Although the exemplary system 600 is shown with two user computers, user devices, or customer devices 605, any number of user computers, user devices, or customer devices can be supported.

Certain embodiments operate in a networked environment, which can include a network(s) 610. The network(s) 610 can be any type of network familiar to those skilled in the art that can support data communications using any of a variety of commercially-available (and/or free or proprietary) protocols, including, without limitation, TCP/IP, SNA^{™}, IPX^{™}, AppleTalk^{™}, and the like. Merely by way of example, the network(s) 610 (similar to network(s) 165 of Fig. 1, or the like) can each include a local area network ("LAN"), including, without limitation, a fiber network, an Ethernet network, a Token-Ring^{™} network, and/or the like; a wide-area network ("WAN"); a wireless wide area network ("WWAN"); a virtual network, such as a virtual private network ("VPN"); the Internet; an intranet; an extranet; a public switched telephone network ("PSTN"); an infra-red network; a wireless network, including, without limitation, a network operating under any of the IEEE 802.11 suite of protocols, the Bluetooth^{™} protocol known in the art, and/or any other wireless protocol; and/or any combination of these and/or other networks. In a particular embodiment, the network might include an access network of the service provider (e.g., an Internet service provider ("ISP")). In another embodiment, the network might include a core network of the service provider, and/or the Internet.

Embodiments can also include one or more server computers 615. Each of the server computers 615 may be configured with an operating system, including, without limitation, any of those discussed above, as well as any commercially (or freely) available server operating systems. Each of the servers 615 may also be running one or more applications, which can be configured to provide services to one or more clients 605 and/or other servers 615.

Merely by way of example, one of the servers 615 might be a data server, a web server, a cloud computing device(s), or the like, as described above. The data server might include (or be in communication with) a web server, which can be used, merely by way of example, to process requests for web pages or other electronic documents from user computers 605. The web server can also run a variety of server applications, including HTTP servers, FTP servers, CGI servers, database servers, Java servers, and the like. In some embodiments of the invention, the web server may be configured to serve web pages that can be operated within a web browser on one or more of the user computers 605 to perform methods of the invention.

The server computers 615, in some embodiments, might include one or more application servers, which can be configured with one or more applications accessible by a client running on one or more of the client computers 605 and/or other servers 615. Merely by way of example, the server(s) 615 can be one or more general purpose computers capable of executing programs or scripts in response to the user computers 605 and/or other servers 615, including, without limitation, web applications (which might, in some cases, be configured to perform methods provided by various embodiments). Merely by way of example, a web application can be implemented as one or more scripts or programs written in any suitable programming language, such as Java^{™}, C, C#^{™} or C++, and/or any scripting language, such as Perl, Python, or TCL, as well as combinations of any programming and/or scripting languages. The application server(s) can also include database servers, including, without limitation, those commercially available from Oracle^{™}, Microsoft^{™}, Sybase^{™}, IBM^{™}, and the like, which can process requests from clients (including, depending on the configuration, dedicated database clients, API clients, web browsers, etc.) running on a user computer, user device, or customer device 605 and/or another server 615. In some embodiments, an application server can perform one or more of the processes for implementing coordination of vehicles, and, more particularly, to methods, systems, and apparatuses for implementing optimized coordination of water-based transport vessels, as described in detail above. Data provided by an application server may be formatted as one or more web pages (comprising HTML, JavaScript, etc., for example) and/or may be forwarded to a user computer 605 via a web server (as described above, for example). Similarly, a web server might receive web page requests and/or input data from a user computer 605 and/or forward the web page requests and/or input data to an application server. In some cases, a web server may be integrated with an application server.

In accordance with further embodiments, one or more servers 615 can function as a file server and/or can include one or more of the files (e.g., application code, data files, etc.) necessary to implement various disclosed methods, incorporated by an application running on a user computer 605 and/or another server 615. Alternatively, as those skilled in the art will appreciate, a file server can include all necessary files, allowing such an application to be invoked remotely by a user computer, user device, or customer device 605 and/or server 615.

It should be noted that the functions described with respect to various servers herein (e.g., application server, database server, web server, file server, etc.) can be performed by a single server and/or a plurality of specialized servers, depending on implementation-specific needs and parameters.

In certain embodiments, the system can include one or more databases 620a-620n (collectively, "databases 620"). The location of each of the databases 620 is discretionary: merely by way of example, a database 620a might reside on a storage medium local to (and/or resident in) a server 615a (and/or a user computer, user device, or customer device 605). Alternatively, a database 620n can be remote from any or all of the computers 605, 615, so long as it can be in communication (e.g., via the network 610) with one or more of these. In a particular set of embodiments, a database 620 can reside in a storage-area network ("SAN") familiar to those skilled in the art. (Likewise, any necessary files for performing the functions attributed to the computers 605, 615 can be stored locally on the respective computer and/or remotely, as appropriate.) In one set of embodiments, the database 620 can be a relational database, such as an Oracle database, that is adapted to store, update, and retrieve data in response to SQL-formatted commands. The database might be controlled and/or maintained by a database server, as described above, for example.

According to some embodiments, system 600 might further comprise computing system 625 and corresponding database(s) 630 that are associated with service provider 635 (similar to computing systems 105 and 205 of Figs. 1 and 2, as well as corresponding database(s) 110, that are associated with service provider 115 of Fig. 1, or the like). System 600 may further comprise one or more vessels 640 (similar to vessels 125a-125n, 235a-235n, and 315 of Figs. 1-3, or the like), one or more vessels 645 (similar to vessels 130a-130n and 315 of Figs. 1 and 3, or the like), and one or more vessels 650 (similar to vessel 130 and 315 of Figs. 1 and 3, or the like) that may be located at geographical region 655 (similar to geographical regions 135 and 305 of Figs. 1 and 3, or the like). In some cases, the one or more vessels 650 may be anchored or berthed at berth(s) 660a of port 660 (similar to ports 140 and 310 of Figs. 1 and 3, or the like), while the one or more vessels 645 may be anchored at anchorage point 665 (similar to anchorage points 145 and 320 of Figs. 1 and 3, or the like), and one or more vessels 640 may be headed toward and may eventually anchor at waiting location 670 (similar to waiting locations or Blue Box locations 150 and 325 of Figs. 1 and 3, or the like). Each of these vessels 640-650 may communicatively couple with at least one of server 615a, server 615b, databases 620a-620n (which may include vessel information database(s) and/or satellite image database(s) (similar to vessel information database(s) 160 and satellite image database(s) 175, respectively, of Fig. 1, or the like), computing system 625, and/or tracking server 685a via one of the following: (i) relay 675 and network(s) 610; (ii) relay 675, one or more of satellites 680a-680n, and network(s) 610; (iii) one or more of satellites 680a-680n and network(s) 610; and/or the like. Herein, wireless communications may be denoted by the lightning bolt symbols, although line connections may denote either wireless or wired communications. The tracking server 685a and corresponding database(s) 685b may be associated with tracking provider(s) 690 (similar to tracking server 180a and corresponding database(s) 180b that are associated with third party tracking provider(s) 185 of Fig. 1, or the like), while the user devices 605a and 605b may be associated with corresponding owners and/or operators of each of the vessels 640-650 (similar to user devices 190a-190n respectively associated with owners/operators 195a-195n of Fig. 1, or the like).

The functions of the system 600 (and its components) are described in greater detail above with respect to systems and examples 100, 200, 300, and 400 of Figs. 1-4 (and the corresponding systems and components thereof).

While certain features and aspects have been described with respect to exemplary embodiments, one skilled in the art will recognize that numerous modifications are possible. For example, the methods and processes described herein may be implemented using hardware components, software components, and/or any combination thereof. Further, while various methods and processes described herein may be described with respect to particular structural and/or functional components for ease of description, methods provided by various embodiments are not limited to any particular structural and/or functional architecture but instead can be implemented on any suitable hardware, firmware and/or software configuration. Similarly, while certain functionality is ascribed to certain system components, unless the context dictates otherwise, this functionality can be distributed among various other system components in accordance with the several embodiments.

Moreover, while the procedures of the methods and processes described herein are described in a particular order for ease of description, unless the context dictates otherwise, various procedures may be reordered, added, and/or omitted in accordance with various embodiments. Moreover, the procedures described with respect to one method or process may be incorporated within other described methods or processes; likewise, system components described according to a particular structural architecture and/or with respect to one system may be organized in alternative structural architectures and/or incorporated within other described systems. Consequently, although several exemplary embodiments are described above, it will be appreciated that the invention is intended to cover all modifications within the scope of the following claims.

### APPENDIX:

### The Blue Visby Solution towards the reduction of greenhouse gas emissions from cargo vessels In international ocean maritime trade

### CONTENTS

I. Outline of The Technical Problem
II. Outline of the Blue Visby Solution
III. Background
IV. The obstacles to a solution to the Technical Problem
V. The way in which the Blue Visby Solution overcomes the obstacles
VI. A description of the ten elements of the Blue Visby Solution

### I. Outline of The Technical Problem

- Maritime transport contributes about 2% of worldwide greenhouse gas ("GHG") emissions, a large part of which is attributed to Bulk Cargo Vessels and Container Vessels ("Cargo Vessels").
- The laws of hydrodynamics dictate that for every one unit of a ship's speed reduction, three units of fuel are saved.
- Cargo Vessels steam from the load Port to the discharge Port at the Service Speed, regardless of the movements of other ships or of other Bulk Cargo Vessels destined for the same Port and regardless of present or expected Congestion (the "Sail Fast, Then Wait" operational model - "SFTW')
- Reducing the speed of a fleet of Cargo Vessels, is a Technical Problem that requires technical, operational and contractual interventions.
- There is no technical, operational or contractual arrangement in place for the co-ordination of the voyages of ocean-going cargo ships, along the lines of air traffic control or airspace management systems.
- All attempts to solve the Problem have foundered on commercial and contractual obstacles, exacerbated by the fragmentation of the maritime and port industries.

### II. Outline of the Blue Visby Solution

The Blue Visby Solution ("BVS") combines two concepts and ten elements:-
(a) A novel technical and operational system to implement a reduction of the speed of Cargo Vessels through (i) dynamic and (ii) environmentally optimal speed allocation, to achieve (iii) synchronised arrival at (iv) defined points near, but not at, ports; and
(b) Multi-lateral contractual arrangements for (i) the observance of the aforementioned technical and operational system and (ii) the sharing of the financial costs and benefits, including the carbon credits, off-sets or in-sets generated by the BVS, which (iii) adapt in a novel way centuries-old maritime law concepts;(iv) apply in a novel way marine insurance principles including mutuality and insurance arrangements relating to the avoidance of marine pollution; and the creation of (v) a market for the trading of arrival positions (slots) and (vi) a market for the trading of maritime GHG emissions associated with the BVS.

### III. Background

### Technical/Engineering Background

A. There are about 40,000 bulk cargo vessels (dry bulk and tankers) engaged in international ocean maritime trade ("Bulk Vessels"). Their characteristics vary, but they all have very similar service speeds of about 14 knots in ballast and 12 knots in laden condition ("Service Speeds").
B. The vast majority of Bulk Vessels consume marine fuels ("Bunkers"), which are usually the lowest grade of the refining process, i.e. highly polluting residual fuels.
C. The technical characteristics of all Bulk Vessels are published by Classification Societies, by whom every ship is regularly inspected and "classed".
D. The geographical position of all Bulker Vessels at any time is known through satellite and shore-based monitoring systems, known as AIS.

### Environmental Background

E. Bulk Vessels produce very considerable CO2 from Bunker consumption.
F. There is at present no scheme for the trading of CO2 emissions from ships, or for carbon credits, or any mandatory international regulatory intervention to the environmentally friendly operation of Bulk Vessels.
G. Academic research suggests that for every knot of reducing Service Speeds, CO2 savings of about 10-20% can be achieved, taking into account the longer steaming time.

### Market Background

H. Bulk Vessels are typically owned by one-ship companies ("Owners"), which operate within shipowning groups.
I. Bulk Vessels are not used to carry the Owners' own cargoes. They are commercially employed by different entities "("Charterers"), meaning that Owners provide a service akin to a taxi service or a rental car service (depending on the contractual terms - see below).
J. Charterers do not necessarily own the cargo on board the Bulk Vessels. They may be providing a service to the sellers of the cargo ("Sellers"), or to the buyers of the cargo ("Buyers").
K. The market for international maritime trade is highly fragmented horizontally: there are hundreds of small/mid-sized shipowning groups, and a similar number of Charterers, Sellers and Buyers
L. Every Bulk Vessel carrying cargo is the embodiment of the diverse commercial interests of a multitude of entities (Owners, Charterers, Buyers, Sellers, often in chains of contracts). This is a further type of fragmentation, operating vertically.
M. Vessels ply between ports around the world ("Ports"), each of which usually comprises many terminals and facilities, which are often organised as independent entities.
N. The Ports are vertically fragmented amongst all the entities that are involved in the handling of Bulk Vessels and horizontally fragmented, in that each Port is usually entirely independent of another Port.

### Operational Background

O. Unlike containerships, Bulk Vessels do not sail according to pre-determined sailing schedules, and usually steam at the Service Speed (see A above).
P. Bulk Vessels operate in what is known as the "tramp trade", i.e. without any pre-determined voyage sequence and are capable of carrying different cargoes at different times, for example a dry Bulk Vessel may carry a cargo of coal from Brazil to the US on one voyage, and then a cargo of grains from the US to China.
Q. Many Ports around the world are congested and there are inefficiencies in sequencing the berthing and un-berthing of ships at the various terminals within each port. It is common for ships to wait at Port anchorages ("Anchorage") for days before berthing ("Congestion").
R. Steaming of Vessels to, and arrival at, any given port is not co-ordinated or synchronised, along the lines of air traffic control or airspace management.
S. Typically, Bulk Vessels steam from the load Port to the discharge Port at the Service Speed, regardless of the movements of other ships or of other Bulk Vessels destined for the same Port, and regardless of present or expected Congestion ("Sail Fast, Then Wait" - "SFTW")
T. It has been estimated that about 8% of Bulk Vessels' life is spent waiting at Anchorages.
U. Similar considerations apply to containerships, and the BVS can be adapted for that market segment. For the sake of brevity, the analysis that follows only deals with Bulk Vessels.

### Contractual Background

V. Vessels are chartered by their shipowners ("Owners") to entities that assume control of their commercial employment of the vessel ("Charterers"). Those contracts ("Charterparties") vary in their terms, but are grouped in types.
W. The commercial operation of Bulk Vessels hinges on the terms and interrelationship between the contracts between Buyers and Sellers ("Sale Contracts") and the Charterparties. Sale contracts also vary in their terms, but are grouped in types.
X. Sale Contracts and Charterparties are premised on the Bulk Vessel performing a Voyage at the Service Speed, and contain terms to that effect ("Due Despatch"). Accordingly, the SFTW operational model is contractually embedded and enforced.
Y. Both Charterparties and Sale Contracts often exist in chains, so that one Vessel may be chartered out consecutively (on similar or different terms) to a series of Charterers, and perform the same Voyage under the terms of each Charterparty. Similarly, one cargo on board the Bulk Vessel performing the Voyage may be bought and sold by several entities consecutively. The entities involved in the middle of the chain are often called "Commodities Traders", as opposed to the producers of the cargo ("Suppliers") and the end users of the cargo ("Receivers"). The existence of such chains introduces further fragmentation.

### Legal Background

Z. The vast majority of Charterparties and Sale Contracts are subject to English law, which is the law of choice in international maritime trade.
AA. Two of the characteristics features of English law are freedom of contract (allowing commercial entities to determine their relationship as they see fit and with very limited statutory intervention); and privity of contract (whereby a contract only binds the parties to it, and not third parties).
BB. Incorporated into Charterparties and Sale Contracts, by virtue of the parties' freedom of contract, is the uniquely maritime concept of the agreement to cooperate in case of danger to the Voyage - the "common maritime adventure" ("Common Maritime Adventure").

### Economic Background

CC. The markets for Charterparties, Contracts and Bunkers are highly volatile and have a correlation to supply and demand in raw materials, to the state of the world economy and to the patterns of global trade flows.
DD. Depending on the state of the relevant markets, the different parties involved have different incentives as to the speed of the Bulk Vessels. This creates an "agency problem": a party has no reason to take a decision (speed reduction) from which it will derive no financial benefit and may suffer financial loss.

### IV. The obstacles to a solution to the Technical Problem

1. If the Technical Problem could be solved purely by a technological solution, a maritime equivalent of air traffic control would have been implemented several decades ago. The Background paragraphs illustrate that the obstacles to resolving the Technical Problem are technological, contractual and market-specific. It's only through a combination of elements dealing with each obstacle that the Technical Problem can be solved.

### V. Overcoming the obstacles towards solving the Technical Problem

2. The Blue Visby Solution overcomes the obstacles as follows:-
a. The obstacle of competition amongst the interested parties is removed by issuing instructions to Bulk Vessels which:
   i. adjust their arrival time ("Blue Visby ETA"), in a way so as to stagger their arrival at a geographical point just off the Anchorage in a way that reflects the service ration of the port of destination, i.e. its ability to receive vessels from Anchorage to berth
   ii. safeguard their order of arrival at the aforementioned geographical point as if the Bulk Vessels had steamed at the Service Speed ("Blue Visby Queue Number" - "BVQN").
b. The obstacle of port fragmentation is removed by treating as the geographical end point of the Voyage not the actual port but, instead, an area outside the Anchorage and outside port limits (the "Blue Box").
c. The contractual obstacles are removed by introducing a set of bespoke and novel contractual provisions ("Blue Visby Protocol" - "BVP"), which become incorporated (by choice) into Charterparties, Bills of Lading and Sale Contracts, and (i) require compliance with the BVS and BVQN and (ii) prevail over other conflicting contractual terms (e.g. Due Despatch).
d. The agency problem is removed by the sharing of any consequent financial cost and financial benefit amongst the parties linked to each voyage (Owners, Charterers, Cargo Buyers, Cargo Sellers), by using an adaptation of the thames of the Common Maritime Adventure in General Average, i.e. pro-rated by reference to the value of the parties' financial interests.
e. The CO2 emissions saved through the use of the Blue Visby Solution will also be shared by way of carbon credits, off-sets or in-sets, issued to the parties linked to each voyage (Owners, Charterers, Cargo Buyers, Cargo Sellers), by using an adaptation of the theme of the Common Maritime Adventure in General Average, i.e. pro-rated by reference to the value of the parties' financial interests. These sharing mechanisms will be set out in a bespoke and novel contractual document, the Blue Visby Rules.
f. The sharing mechanism outlined in the two above sub-paragraphs can operate on a cash-basis amongst the participants, or via insurance arrangements analogous to those applying under SCOPIC in relation to marine pollution.
g. The industry fragmentation problem is removed by creating a not-for-profit Mutual Association ("Blue Visby Mutual"), of which all entities adopting the Blue Visby Protocol and the Blue Visby Rules will be members, and the Blue Visby Mutual will administer the sharing of any consequent financial cost and benefit.
h. The necessary market flexibility with regard to arrival into the Blue Boxes (and, hence, into port) will be introduced through a system for trading of BVQNs, akin to trading landing slots at airports, but more dynamic, as it will operate in real time (and not yearly).
i. The carbon credits or off-sets or in-sets issued to the parties will be traded. This can be done either as part of a bespoke over-the-counter market, or in an exchange overseen by the Blue Visby Mutual. This market may be open to parties not participating to the Blue Visby Solution, thereby creating a dedicated voluntary maritime carbon market, the "Blue CO2 Exchange").

### VI. A description of the ten elements of the Blue Visby Solution

3. As mentioned in the Outline, the Blue Visby Solution ("BVS") comprises ten elements (within a technical and a contractual concept):-
a. A Technical and Operational System ("TOS") for the reduction of the speed of Bulk Vessels through (i) *dynamic (ii) environmentally optimal speed allocation* and (iii) *synchronised arrival* at (iv) *defined points*; and
b. A web of bespoke contractual arrangements, which together underpin the TOS (Blue Visby Protocol, Blue Visby Rules and Blue Visby Mutual) and make the implementation of the TOS possible through arrangements for (i) t*he observance of* the *aforementioned operational system*; (ii) the *sharing of the financial costs and benefits,* (which (iii) deploy in a novel way centuries-old *maritime law concepts,* and (iv) apply in a novel way *the principle of mutuality,* inspired by long-established marine insurance principles); and (v) the creation of a market for BVQNs (the "Blue Box Slot Exchange") (which will eventually develop into a market for berthing slots at participating ports); and (vi) the creation of a voluntary market for the carbon credits, off-sets or in-sets generated by deploying the BVS (the "Blue CO2 Exchange") (which can potentially be open to non-participants and, also, to the trading of other maritime-related carbon credits, off-sets or in-sets generated through other technological innovations).

4. It is the combination of those ten elements that produces the solution to the Technical Problem.

### "Dynamic...[speed allocation] ..."

5. The TOS deploys:-
a. information as to the position of all ships worldwide (available as AIS or via earth observation satellites);
b. position data, speed data, draft data and Voyage information from participating Bulk Vessels;
c. anchorage congestion information collected through earth observation satellites;
d. optimisation algorithms to co-ordinate the movements of Bulk Vessels towards the Blue Box just outside the limits of the Anchorage of each destination Port.

6. The above data and information will be collated and processed dynamically, as information about the number and position of Bulk Vessels steaming towards a Port changes in real time.

7. The algorithms will use mathematical formulae used in comparable co-ordination problems and applications in various industries and industrial processes.

8. The TOS will (dynamically) allocate the appropriate target arrival time (Blue Visby ETA) to each Bulk Vessel, and will issue recommendations for the Bulk Vessel to follow as to the optimal arrival time.

9. The TOS will be integrated with ECDIS electronic chart systems.

### "... environmentally optimal [speed affocation]..."

10. The TOS will generally recommend optimal arrival times that will be based on speeds for each Bulk Vessel which will be slower than their Service Speed, resulting in the reduction of fuel consumption and, hence, GHG.

11. In addition, the TOS will take into account vessel-specific factors, in order to arrive at the environmentally optimal speed for each particular Bulk Vessel at any particular stage of the Voyage ("Blue Speed"):-
a. the characteristics of each Bulk Vessel, as these are published by the Classification Societies.
b. The length of stay at anchorage in warm waters, which increases the risk of hull fouling, which in turn increases hydrodynamic resistance and affects a ship's *environmentally* optimal speed;
c. The length of time since a Bulk Vessel's last drydocking, as this is a time when typically hulls are sandblasted, hull coatings re-applied and engines overhauled - all leading to improved performance;
d. Real-time fuel consumption data from on-board sensors, deploying the Internet of Things, as such technologies mature.

### "...[arrival] at defined points ..."

12. The TOS defines an area outside the limits of the Anchorage of each Port worldwide (as used by Bulk Vessels), called Blue Box, which acts as the notional arrival target for all Bulk Vessels destined for that Port.

13. The precise location of each Blue Box will take into account geographical and hydrographic data, and will be incorporated into ECDIS electronic charts.

### "...synchronised arrival ..."

14. The TOS will allocate speeds to each Bulk Vessel steaming towards a particular Port on the basis that their arrival into the Blue Box in sequence that (a) takes into account the congestion at the Anchorage and (b) retains the order in which the Bulk Vessels would have arrived if they had each steamed at their respective Service Speeds. In particular:-
a. The BVS does not intend to solve the problem of Port or Anchorage Congestion because that depends on the particular circumstances of berthing arrangements at each Port around the world. In essence, that is not a vessel optimisation problem but a berthing optimisation problem, which depends largely on shore-side factors. Due to the obstacles described in the Background, that would be impossible to solve on a global basis. Nevertheless, the BVS will assist ports to optimise their operations.
b. By introducing the Blue Box, as a "notional arrival point", outside port limits, the circumstances of berth optimisation at each individual Port are side-stepped.
c. The TOS will monitor the conditions at each Port, so as to sequence the arrival of steaming Bulk Vessels into the Blue Box, in a way so that the arriving Bulk Vessels proceed and wait at the Anchorage for as short a period as possible,
d. The TOS will not alter the sequence of the arrival of Bulk Vessels into the Blue Box, but will only amend the timing of each arrival, and intervals between each arrival. That is critical for commercial reasons (as will be explained below), and will be achieved as follows:-
   i. Upon each Bulk Vessel sailing from each departure Port towards another destination Port, the TOS will calculate the time the Bulk Vessel would have arrived if she had steamed at her Service Speed ("Waiting Estimated Time of Arrival", or "W/ETA").
   ii. In the light of the information about other ships destined for the same Port, the TOS will produce an estimated arrival sequence, essentially a queue number as if the Bulk Vessel were joining a queue for entry into the Port, except that the BVS allocates that queue number not for port entry, but for arrival in the Blue Box ("Blue Box Queue [number]", or "BQ[number]")
   iii. In the light of Congestion conditions, the TOS will apply the algorithm and produce a different target time for arrival into the Blue Box ("Blue Estimated Time of Arrival", or "B/ETA"), always retaining a Bulk Vessel's BQ number.

15. Neither BQ number nor B/ETA nor Blue Speed will be static. Their values will change dynamically, as the TOS continually monitors conditions: i.e. more Bulk Vessels steaming to the same port from a shorter distance, problems causing delays to Bulk Vessels, worsening or improving Congestion at Port etc.

### "... contractual arrangements for the observance of the operational system ..."

*16*. The BVS solution is a voluntary arrangement for willing participants, but it will be binding on them through a web of novel contractual arrangements, to which all participants will be party.

*17*. The operational recommendations made through the TOS described above (Blue Speed, BQ, B/ETA) will be binding on the parties involved in any particular voyage (Owners, Charterers, Buyers, Sellers - in contract chains or not) through a set of bespoke and novel contractual terms. Such terms will be designed to be annexed to Charterparties and Sale Contracts, "the Blue Visby Protocol". This will expressly provide that it will take precedence over other contractual provisions, subject only to safety concerns. (The name is inspired by the Hague-Visby Rules, a set of cardinal rules of almost universal applications dealing with maritime carriers' liability for the carriage of goods.)

### "... contractual arrangements for the sharing of the financial costs and benefits..."

18. To the extent that Blue Speed is lower than the Service Speed, it will produce savings in fuel cost. Depending on the contractual arrangements (Charterparty on time or voyage terms), this will benefit one or other party. On the other hand, B/ETA may result in a delayed arrival at the Anchorage as a result of the slower speed towards the Blue Box (but not at delayed berthing, as Congestion at the Anchorage would have prevented berthing even if it had not been for the BVS). This may have adverse financial consequences to the Shipowner (if the Charterparty is on voyage terms) or to the Charterer (if the Charterparty is on time terms). Similarly, it may have adverse financial consequences to the Buyers or Sellers of the cargo on board (if the time of arrival at the Anchorage is somehow linked to performance of their obligations under the Sale Contract).

19. The BVS acknowledges these financial consequences and deals with them through a sharing mechanism. The details of the sharing mechanism are described below, but the contractual arrangement for that to take effect is through a twin set of bespoke and novel contractual terms: (a) the necessary provisions to the Blue Visby Protocol described above; and (b) a participation agreement into an independent association (the Blue Visby Mutual), which will administer the sharing mechanism (which will also be described below), under a set of Rules (the Blue Visby Rules).

### "... [contractual arrangements] deploying centuries-old maritime law concepts ..."

20. The sharing mechanism (as will be provided for in the Blue Visby Protocol and administered by the Blue York Association) is an adaptation of the concept of General Average.

21. Ever since ancient times, parties involved in maritime trade accepted the need for sacrificing their own individual financial interests in order to save the whole expedition, the "common maritime adventure", in which case all the other parties would contribute to compensate the sacrificing party. This arrangement survives to this day and is known as General Average (GA): if it becomes necessary to "incur an extraordinary expense or to suffer a sacrifice in order to save the maritime adventure", every party to the common maritime adventure (shipowners, cargo owners and charterers) contribute in proportion to the value of the financial stake of each in that maritime adventure.

22. The conceptual premise of adapting GA for the purposes of the solving the Technical Problem through the BVS ("Blue GA") is this:-
a. climate change is an emergency;
b. The maritime industry must react to that emergency in the same way that it has reacted for millenia to maritime emergencies (e.g. a fire on board);
c. the BVS reduces GHG from Bulk Vessels, thereby delivering a common benefit (akin to putting out a fire on board);
d. Deploying the BVS will necessitate financial costs for some parties to the maritime adventure (akin to the cost or sacrifice involved in putting out the fire);
e. The parties involved in the Voyage will contribute in proportion to the value of their financial interests: "Blue GA" (akin to GA contributions).

23. The rules governing GA are the York-Antwerp Rules, which were designed in the early 20th century as a voluntary arrangement.

24. The BVS is inspired by those rules to set up a novel set of terms for a completely different purpose, i.e., the "Blue Visby Rules", for the purposes of organising the mechanics of Blue GA. This will be a voluntary arrangement, just like the original GA Rules.

25. The BVS will introduce an adapted version of the existing arrangements for General Average (using the existing network of service providers, the professional body of average adjusters) that are in place for the collection of data regarding the value of financial interests and for the accounting process of adjustment.

26. Blue GA will be provided for in marine insurance contracts, in a way analogous to payments made for the protection of the marine environment (SCOPIC), thereby facilitating the accounting aspect of Blue GA payments, and possible counter-party risk.

### "... [contractual arrangements which] use as leverage the tendency towards self-regulation of the maritime industry..."

27. The voluntary nature of the contractual arrangements underpinning the BVS are in line with the freedom of contract upon which the entire edifice of international maritime transport has been built.

28. That is a necessary condition for its adoption by the industry, but it is not a sufficient condition. The BVS also hinges on the wide acceptance that collaborative solutions are necessary in order for the maritime industry to decarbonise..

29. There is an example of collaboration and pooling of interests in the maritime industry, which the BVS will emulate: for over 150 years, the third-party liabilities of shipowners (e.g. for damage to cargo and to the environment) have been insured by mutual insurance associations (known as Protection & Indemnity Mutual Associations), of which all shipowners are members, so that liabilities are shared across the entire shipowning community.

30. The trust necessary for the administration of the BVS will be achieved through the establishment of the Blue Visby Association, which will administer Blue GA.

### "...the creation of a market for BVQPs, which will eventually develop into a market for berthing slots at participating ports"

31. The nature of the BVS as a voluntary scheme allows flexibility for participants to opt out of the system for specific voyages, either by seeking an earlier BVQP or by making an early slot allocated to them available to other participants. This will be achieved through the creation of an exchange platform for the trading of BVQPs.

32. While the vessel availing itself of an earlier BVQP will be able to steam at a faster speed, and hence increase its emissions, the vessel dropping down to a later BVQP will sail more slowly. Overall, the goal of optimisation will be achieved.

33. The existence of a market for BVQNs will be a preparatory step for the creation of a market for berthing slots at participating ports. This will, eventually, complete the optimisation goal of the BVS.

### "..the creation of a voluntary market for carbon credits/off-sets/in-sets generated by BVS"

34. The emissions saved (calculated and attributed by reference to the value of the participating interests) will be converted into carbon credits/off-sets/in-sets for each of the participating interests, which will be tradable on an exchange platform ("Blue CO2-X"), i.e. a voluntary carbon market that will be exclusive to the maritime industry.

35. Blue CO2-X will be accessible by any maritime entity (not only to BV participants), who may wish to buy or sell credits/off-sets/in-sets:-
a. BV participants will be able to sell the credits/off-sets/in-sets representing CO2 emissions saved through the operation of the BVS, which will be allocated by reference to the value of the participating interests in the maritime adventure (in a manner akin to that for Blue GA ias above);
b. Both BV participants and other entities will be able to buy credits/offsets/in-sets to off-set the CO2 emissions on non-participating voyages;
c. Both BV participants and other entities will be able to sell credits/offsets/in-sets representing CO2 emissions saved through other measures, including hardware ("retrofits"), temporarily and permanently removing a vessel from the market through lay-up or recycling.

36. The existence of a voluntary market linked to the BVS and dedicated to the maritime industry will both encourage adoption of the BVS, but will also add flexibility for its use, while at the same time facilitate the adoption of other maritime GHG abatement technologies and solutions.

## Claims

1. A method, comprising:
receiving, using a computing system, at least two of first data, second data, or third data, wherein the first data is data from one or more third party water-based transport vessel tracking systems and includes a location of each water-based transport vessel among a plurality of water-based transport vessels within a predetermined geographical region, wherein the second data is data associated with each of one or more first water-based transport vessels among the plurality of water-based transport vessels and includes specific vessel-related information, and wherein the third data is data from one or more satellite-based observation systems and includes relational data associated with the one or more first water-based transport vessels within the predetermined geographical region relative to each other and relative to at least one of one or more anchorage points, one or more ports, or one or more preset waiting locations that are outside the one or more anchorage points and outside the one or more ports;
analyzing, using the computing system, the at least two of the first data, the second data, or the third data to calculate an optimal speed at which a first water-based transport vessel among the one or more first water-based transport vessels should travel along a first course from its current position to a first preset waiting location among the one or more preset waiting locations to arrive at a corresponding optimal target arrival time based on one or more calculations to coordinate synchronous arrival or sequential arrival with at least one other first water-based transport vessel, the one or more calculations comprising:
calculating an estimated arrival time for each water-based transport vessel travelling to a first port, corresponding to the time each water-based transport vessel would arrive at the first port if it travelled at its service speed;
producing an estimated arrival sequence to the first port;
producing a queue number for arrival into the first preset waiting location for each water-based transport vessel based on the estimated arrival sequence to the first port; and
producing the optimal target arrival time different to the estimated arrival time for each water-based transport vessel, with the corresponding optimal speed, whilst retaining the queue number for each water-based transport vessel; and
sending, using the computing system and to the first water-based transport vessel, a first message containing information regarding the optimal speed and the optimal target arrival time.

2. The method of claim 1, wherein the computing system comprises one of a water-based transport vessel coordination system, a server computer over a network, a cloud-based computing system over a network, or a distributed computing system.

3. The method of claim 1, wherein the one or more third party water-based transport vessel tracking systems comprise one or more of an automatic identification system ("AIS"), an Earth observation satellite-based vessel tracking system, a vessel traffic services ("VTS") system, a marine radar system, a harbormaster system, or a coast guard system.

4. The method of claim 1, wherein the specific vessel-related information comprises at least one of position data, speed data, draft data, voyage information, on-board fuel consumption sensor data, or maintenance records.

5. The method of claim 1, wherein the relational data comprises data regarding at least one of position, vector, and proximity of the one or more first water-based transport vessels within the predetermined geographical region relative to each other and relative to the at least one of the one or more anchorage points, the one or more ports, or the one or more preset waiting locations.

6. The method of claim 5, further comprising:
analyzing, using the computing system, image or video data from the third data from the one or more satellite-based observation systems to generate the relational data.

7. The method of claim 1, wherein calculating the optimal speed at which the first water-based transport vessel among the one or more first water-based transport vessels should travel along the first course from its current position to the first preset waiting location at the corresponding optimal target arrival time comprises calculating, using the computing system, the optimal speed based at least in part on one or more of calculations to arrive at the optimal target arrival time to reduce waiting time for berthing at a nearby port while at the first preset waiting location or calculations to reduce greenhouse gas emissions while travelling along the first course.

8. The method of claim 1, wherein the first message comprises instructions for travelling at the optimal speed, based on contractual obligations binding each of one or more owners or operators of the first water-based transport vessel to follow the instructions.

9. The method of claim 1, wherein receiving the at least two of first data, second data, or third data, analyzing the at least two of the first data, the second data, or the third data to calculate the optimal speed and/or the optimal target arrival time, and sending the first message are performed dynamically in real-time or near-real-time.

10. The method of claim 1, further comprising:
analyzing, using the computing system, the at least two of the first data, the second data, or the third data to calculate a corresponding optimal course, target arrival time, and/or speed for each of two or more second water-based transport vessels among the one or more first water-based transport vessels within the predetermined geographical region to coordinate arrival at a second preset waiting location among the one or more preset waiting locations; and
sending, using the computing system and to each second water-based transport vessel, a second message containing information regarding the corresponding optimal course, target arrival time, and/or speed.

11. The method of claim 10, wherein calculating the corresponding optimal course, target arrival time, and/or speed for each of two or more second water-based transport vessels to coordinate arrival at the second preset waiting location comprises calculating, using the computing system, each corresponding optimal course, target arrival time, and/or speed based at least in part on one or more of calculations to reduce waiting time for berthing at a nearby port while at the second preset waiting location, calculations to coordinate synchronous arrival of all of the two or more second water-based transport vessels, or calculations to reduce greenhouse gas emissions while travelling to the second preset waiting location.

12. The method of claim 10, wherein the second message comprises instructions for travelling at the corresponding optimal course and speed to arrive at the corresponding target arrival time, based on contractual obligations binding corresponding each of one or more owners or operators of a corresponding one of the two or more second water-based transport vessel to follow the instructions.

13. The method of claim 1, further comprising:
identifying, using the computing system, a preset waiting location among the one or more preset waiting locations based at least in part on geographical and hydrographic data associated with at least one of a nearby port or one or more anchorage points around the nearby port.

14. A system, comprising:
a computing system, comprising:
at least one first processor; and
a first non-transitory computer readable medium communicatively coupled to the at least one first processor, the first non-transitory computer readable medium having stored thereon computer software comprising a first set of instructions that, when executed by the at least one first processor, causes the computing system to:
receive at least two of first data, second data, or third data, wherein the first data is data from one or more third party water-based transport vessel tracking systems and includes a location of each water-based transport vessel among a plurality of water-based transport vessels within a predetermined geographical region, wherein the second data is data associated with each of one or more first water-based transport vessels among the plurality of water-based transport vessels and includes specific vessel-related information, and wherein the third data is data from one or more satellite-based observation systems and includes relational data associated with the one or more first water-based transport vessels within the predetermined geographical region relative to each other and relative to at least one of one or more anchorage points, one or more ports, or one or more preset waiting locations that are outside the one or more anchorage points and outside the one or more ports;
analyze the at least two of the first data, the second data, or the third data to calculate an optimal speed at which a first water-based transport vessel among the one or more first water-based transport vessels should travel along a first course from its current position to a first preset waiting location among the one or more preset waiting locations to arrive at a corresponding optimal target arrival time based on one or more calculations to coordinate synchronous arrival or sequential arrival with at least one other first water-based transport vessel, the one or more calculations comprising:
calculate an estimated arrival time for each water-based transport vessel travelling to a first port, corresponding to the time each water-based transport vessel would arrive at the first port if it travelled at its service speed;
produce an estimated arrival sequence to the first port;
produce a queue number for arrival into the first preset waiting location for each water-based transport vessel based on the estimated arrival sequence to the first port; and
produce the optimal target arrival time different to the estimated arrival time for each water-based transport vessel, with the corresponding optimal speed, whilst retaining the queue number for each water-based transport vessel; and
send, to the first water-based transport vessel, a first message containing information regarding the optimal speed and the optimal target arrival time.

15. The system of claim 14, wherein calculating the optimal speed at which the first water-based transport vessel among the one or more first water-based transport vessels should travel along the first course from its current position to the first preset waiting location at the corresponding optimal target arrival time comprises calculating, using the computing system, the optimal speed based at least in part on one or more of calculations to arrive at the optimal target arrival time to reduce waiting time for berthing at a nearby port while at the first preset waiting location, or calculations to reduce greenhouse gas emissions while travelling along the first course.

## Patentansprüche

1. Verfahren, umfassend:
Empfangen von zumindest zwei aus ersten Daten, zweiten Daten oder dritten Daten unter Verwendung eines Computersystems, wobei die ersten Daten Daten von einem oder mehreren Wassertransportfahrzeug-Trackingsystemen Dritter sind und eine Position jedes Wasserstransportfahrzeugs aus einer Vielzahl von Wassertransportfahrzeugen innerhalb einer vorbestimmten geografischen Region umfassen, wobei die zweiten Daten Daten sind, die jedem aus einem oder mehreren ersten Wassertransportfahrzeugen aus der Vielzahl von Wassertransportfahrzeugen zugeordnet sind und bestimmte, das Fahrzeug betreffende Informationen umfassen, und wobei die dritten Daten Daten von einem oder mehreren Satellitenbeobachtungssystemen sind und relationale Daten umfassen, die dem einen oder den mehreren ersten Wassertransportfahrzeugen innerhalb der vorbestimmten geografischen Region relativ zueinander und relativ zu zumindest einem oder mehreren Ankerpunkten, einem oder mehreren Häfen oder einer oder mehreren voreingestellten Wartepositionen, die außerhalb des einen oder der mehreren Ankerpunkte und außerhalb des einen oder der mehreren Häfen liegen, zugeordnet sind;
Analysieren der zumindest zwei aus den ersten Daten, den zweiten Daten oder den dritten Daten unter Verwendung des Computersystems, um eine optimale Geschwindigkeit zu berechnen, mit der sich ein erstes Wassertransportfahrzeug aus dem einen oder den mehreren ersten Wassertransportfahrzeugen entlang eines ersten Kurses von dessen aktueller Position zu einer ersten voreingestellten Warteposition aus der einen oder den mehreren voreingestellten Wartepositionen bewegen sollte, um zu einer entsprechenden optimalen Ankunftszeit basierend auf einer oder mehreren Berechnungen zum Koordinieren einer synchronen Ankunft oder einer aufeinanderfolgenden Ankunft mit zumindest einem anderen ersten Wasserstransportfahrzeug anzukommen, wobei die eine oder die mehreren Berechnungen Folgendes umfassen:
Berechnen einer geschätzten Ankunftszeit für jedes Wassertransportfahrzeug, das sich in einen ersten Hafen bewegt, entsprechend des Zeitpunkts, zu dem jedes Wassertransportfahrzeug an dem ersten Hafen ankommen würde, wenn es mit seiner Betriebsgeschwindigkeit fahren würde;
Erzeugen einer geschätzten Ankunftssequenz in dem ersten Hafen;
Erzeugen einer Warteschlangennummer für die Ankunft an der ersten voreingestellten Warteposition für jedes Wassertransportfahrzeug basierend auf der geschätzten Ankunftssequenz in dem ersten Hafen; und
Erzeugen der optimalen Ankunftszeit, die sich von der geschätzten Ankunftszeit für jedes Wassertransportfahrzeug unterscheidet, mit der entsprechenden optimalen Geschwindigkeit, während die Warteschlangennummer für jedes Wassertransportfahrzeug beibehalten wird; und
Senden einer ersten Nachricht, die Informationen betreffend die optimale Geschwindigkeit und die optimale Zielankunftszeit enthält, an das erste Wassertransportfahrzeug und unter Verwendung des Computersystems.

2. Verfahren nach Anspruch 1, wobei das Computersystem eines aus einem Wassertransportfahrzeug-Koordinationssystem, einem Servercomputer über ein Netzwerk, ein Cloud-basiertes Computersystem über ein Netzwerk oder ein verteiltes Computersystem umfasst.

3. Verfahren nach Anspruch 1, wobei das eine oder die mehreren Wassertransportfahrzeug-Trackingsysteme Dritter eines oder mehrere aus einem automatischen Identifikationssystem ("AIS"), einem Fahrzeug-Trackingsystem auf Erdbeobachtungssatelliten-Basis, einem Fahrzeugverkehrdienste-("VTS") System, einem Marineradarsystem, einem Hafenmeistersystem oder einem Küstenwachesystem umfassen.

4. Verfahren nach Anspruch 1, wobei die bestimmten, das Fahrzeug betreffenden Informationen zumindest eines aus Positionsdaten, Geschwindigkeitsdaten, Tiefgangdaten, Reiseinformationen, Kraftstoffverbrauchssensordaten an Bord oder Wartungsaufzeichnungen umfassen.

5. Verfahren nach Anspruch 1, wobei die relationalen Daten Daten betreffend zumindest eines aus einer Position, einem Vektor und einer Nähe des einen oder der mehreren ersten Wassertransportfahrzeuge innerhalb der vorbestimmten geografischen Region relativ zueinander und relativ zu dem zumindest einen aus dem einen oder den mehreren Ankerpunkten, dem einen oder den mehreren Häfen oder der einen oder den mehreren voreingestellten Wartepositionen umfassen.

6. Verfahren nach Anspruch 5, das ferner Folgendes umfasst:
Analysieren von Bild- oder Videodaten aus den dritten Daten von dem einen oder den mehreren Satellitenbeobachtungssystemen unter Verwendung des Computersystems zum Erzeugen der relationalen Daten.

7. Verfahren nach Anspruch 1, wobei das Berechnen der optimalen Geschwindigkeit, mit der sich das erste Wassertransportfahrzeug aus dem einen oder den mehreren ersten Wassertransportfahrzeugen entlang des ersten Kurses von dessen aktueller Position in die erste voreingestellte Warteposition zu der entsprechenden optimalen Zielankunftszeit fortbewegen sollte, das Berechnen der optimalen Geschwindigkeit zumindest teilweise basierend auf einer oder mehreren aus Berechnungen, um zur optimalen Zielankunftszeit anzukommen, um Wartezeiten zum Anlegen in einem nahegelegenen Hafen zu reduzieren, während es sich in der ersten voreingestellten Warteposition befindet, oder aus Berechnungen, um Treibhausgasemissionen zu reduzieren, während es sich entlang des ersten Kurses fortbewegt, unter Verwendung des Computersystems umfasst.

8. Verfahren nach Anspruch 1, wobei die erste Nachricht Anweisungen zum Fortbewegen mit der optimalen Geschwindigkeit basierend auf Vertragspflichten umfasst, die jeden aus dem einen oder den mehreren Eigentümern oder Betreibern des ersten Wassertransportfahrzeugs zum Einhalten der Anweisungen verpflichten.

9. Verfahren nach Anspruch 1, wobei das Empfangen der zumindest zwei aus den ersten Daten, zweiten Daten oder dritten Daten, das Analysieren der zumindest zwei aus den ersten Daten, den zweiten Daten oder den dritten Daten zum Berechnen der optimalen Geschwindigkeit und/oder der optimalen Zielankunftszeit, und das Senden der ersten Nachricht dynamisch in Echtzeit oder beinahe in Echtzeit durchgeführt werden.

10. Verfahren nach Anspruch 1, das ferner Folgendes umfasst:
Analysieren der zumindest zwei aus den ersten Daten, den zweiten Daten oder den dritten Daten unter Verwendung des Computersystems, um einen entsprechenden optimalen Kurs, eine Zielankunftszeit und/oder eine Geschwindigkeit für jedes von zwei oder mehr zweiten Wassertransportfahrzeugen aus dem einen oder den mehreren ersten Wassertransportfahrzeugen innerhalb der vorbestimmten geografischen Region zu berechnen, um die Ankunft an einer zweiten voreingestellten Warteposition aus der einen oder den mehreren voreingestellten Wartepositionen zu koordinieren; und
Senden einer zweiten Nachricht, die Informationen betreffend den entsprechenden optimalen Kurs, die Zielankunftszeit und/oder die Geschwindigkeit enthalten, unter Verwendung des Computersystems an jedes zweite Wassertransportfahrzeug.

11. Verfahren nach Anspruch 10, wobei das Berechnen des entsprechenden optimalen Kurses, der Zielankunftszeit und/oder der Geschwindigkeit für jedes aus zwei oder mehr zweiten Wassertransportfahrzeugen zum Koordinieren der Ankunft an der zweiten voreingestellten Warteposition das Berechnen jedes entsprechenden optimalen Kurses, der Zielankunftszeit und/oder der Geschwindigkeit zumindest teilweise basierend auf einer oder mehreren Berechnungen unter Verwendung des Computersystems zum Reduzieren der Wartezeit zum Anlegen in einem nahegelegenen Hafen, während sich dieses an der zweiten voreingestellten Warteposition befindet, auf Berechnungen zum Koordinieren einer synchronen Ankunft aller aus den zwei oder mehr zweiten Wassertransportfahrzeugen oder auf Berechnungen zum Reduzieren der Treibhausgasemissionen, während es sich in die zweite voreingestellte Warteposition fortbewegt, umfasst.

12. Verfahren nach Anspruch 10, wobei die zweite Nachricht Anweisungen zum Fortbewegen mit dem entsprechenden optimalen Kurs und der optimalen Geschwindigkeit zur Ankunft zu entsprechenden Zielankunftszeit basierend auf Vertragspflichten umfasst, die jeden aus dem einen oder den mehreren Eigentümern oder Betreibern des zweiten Wassertransportfahrzeugs zum Einhalten der Anweisungen verpflichten.

13. Verfahren nach Anspruch 1, das ferner Folgendes umfasst:
Identifizieren einer voreingestellten Warteposition aus der einen oder den mehreren voreingestellten Wartepositionen zumindest teilweise basierend auf geografischen und hydrografischen Daten, die zumindest einem aus einem nahegelegenen Hafen oder einem oder mehreren Ankerpunkten rund um den nahegelegenen Hafen zugeordnet sind, unter Verwendung des Computersystems.

14. System, umfassend:
ein Computersystem, umfassend:
zumindest einen ersten Prozessor; und
ein erstes nichtflüchtiges computerlesbares Medium, das kommunikativ mit dem zumindest einen ersten Prozessor gekoppelt ist, wobei das erste nichtflüchtige computerlesbare Medium Computersoftware auf diesen gespeichert umfasst, die einen ersten Satz von Befehlen umfasst, die, wenn sie durch den zumindest einen ersten Prozessor ausgeführt werden, das Computersystem veranlassen zum:
Empfangen von zumindest zwei aus ersten Daten, zweiten Daten oder dritten Daten, wobei die ersten Daten Daten von einem oder mehreren Wassertransportfahrzeug-Trackingsystemen Dritter sind und eine Position jedes Wasserstransportfahrzeugs aus einer Vielzahl von Wassertransportfahrzeugen innerhalb einer vorbestimmten geografischen Region umfassen, wobei die zweiten Daten Daten sind, die jedem aus einem oder mehreren ersten Wassertransportfahrzeugen aus der Vielzahl von Wassertransportfahrzeugen zugeordnet sind und bestimmte, das Fahrzeug betreffende Informationen umfassen, und wobei die dritten Daten Daten von einem oder mehreren Satellitenbeobachtungssystemen sind und relationale Daten umfassen, die dem einen oder den mehreren ersten Wassertransportfahrzeugen innerhalb der vorbestimmten geografischen Region relativ zueinander und relativ zu zumindest einem oder mehreren Ankerpunkten, einem oder mehreren Häfen oder einer oder mehreren voreingestellten Wartepositionen, die außerhalb des einen oder der mehreren Ankerpunkte und außerhalb des einen oder der mehreren Häfen liegen, zugeordnet sind;
Analysieren der zumindest zwei aus den ersten Daten, den zweiten Daten oder den dritten Daten, um eine optimale Geschwindigkeit zu berechnen, mit der sich ein erstes Wassertransportfahrzeug aus dem einen oder den mehreren ersten Wassertransportfahrzeugen entlang eines ersten Kurses von dessen aktueller Position zu einer ersten voreingestellten Warteposition aus der einen oder den mehreren voreingestellten Wartepositionen bewegen sollte, um zu einer entsprechenden optimalen Ankunftszeit basierend auf einer oder mehreren Berechnungen zum Koordinieren einer synchronen Ankunft oder einer aufeinanderfolgenden Ankunft mit zumindest einem anderen ersten Wasserstransportfahrzeug anzukommen, wobei die eine oder die mehreren Berechnungen Folgendes umfassen:
Berechnen einer geschätzten Ankunftszeit für jedes Wassertransportfahrzeug, das sich in einen ersten Hafen bewegt, entsprechend des Zeitpunkts, zu dem jedes Wassertransportfahrzeug an dem ersten Hafen ankommen würde, wenn es mit seiner Betriebsgeschwindigkeit fahren würde;
Erzeugen einer geschätzten Ankunftssequenz in dem ersten Hafen;
Erzeugen einer Warteschlangennummer für die Ankunft an der ersten voreingestellten Warteposition für jedes Wassertransportfahrzeug basierend auf der geschätzten Ankunftssequenz in dem ersten Hafen; und
Erzeugen der optimalen Ankunftszeit, die sich von der geschätzten Ankunftszeit für jedes Wassertransportfahrzeug unterscheidet, mit der entsprechenden optimalen Geschwindigkeit, während die Warteschlangennummer für jedes Wassertransportfahrzeug beibehalten wird; und
Senden einer ersten Nachricht, die Informationen betreffend die optimale Geschwindigkeit und die optimale Zielankunftszeit enthält, an das erste Wassertransportfahrzeug.

15. System nach Anspruch 14, wobei das Berechnen der optimalen Geschwindigkeit, mit der sich das erste Wassertransportfahrzeug aus dem einen oder den mehreren ersten Wassertransportfahrzeugen entlang des ersten Kurses von dessen aktueller Position in die erste voreingestellte Warteposition zu der entsprechenden optimalen Zielankunftszeit fortbewegen sollte, das Berechnen der optimalen Geschwindigkeit zumindest teilweise basierend auf einer oder mehreren aus Berechnungen, um zur optimalen Zielankunftszeit anzukommen, um Wartezeiten zum Anlegen in einem nahegelegenen Hafen zu reduzieren, während es sich in der ersten voreingestellten Warteposition befindet, oder aus Berechnungen, um Treibhausgasemissionen zu reduzieren, während es sich entlang des ersten Kurses fortbewegt, unter Verwendung des Computersystems umfasst.

## Revendications

1. Procédé, comprenant les étapes consistant à :
recevoir, à l'aide d'un système informatique, au moins deux types de données parmi des premières données, des deuxième données et des troisièmes données, dans lequel les premières données sont des données provenant d'un ou de plusieurs systèmes de suivi de navire de transport par voie navigable tiers et comprennent un emplacement de chaque navire de transport par voie navigable parmi une pluralité de navires de transport par voie navigable dans une région géographique prédéterminée, dans lequel les deuxièmes données sont des données associées à chacun d'un ou de plusieurs premiers navires de transport par voie navigable parmi la pluralité de navires de transport par voie navigable et comprennent des informations spécifiques relatives au navire, et dans lequel les troisièmes données sont des données provenant d'un ou de plusieurs systèmes d'observation par satellite et comprennent des données relationnelles associées aux un ou plusieurs premiers navires de transport par voie navigable dans la région géographique prédéterminée les uns par rapport aux autres et par rapport à un ou plusieurs points d'ancrage et/ou un ou plusieurs ports et/ou ou un ou plusieurs emplacements d'attente prédéfinis qui sont à l'extérieur des un ou plusieurs points d'ancrage et à l'extérieur des un ou plusieurs ports ;
analyser, à l'aide du système informatique, les au moins deux types de données parmi les premières données, les deuxièmes données et les troisièmes données pour calculer une vitesse optimale à laquelle un premier navire de transport par voie navigable parmi les un ou plusieurs premiers navires de transport par voie navigable doit se déplacer le long d'une première trajectoire depuis sa position en cours jusqu'à un premier emplacement d'attente prédéfini parmi les un ou plusieurs emplacements d'attente prédéfinis pour arriver à une heure d'arrivée cible optimale correspondante sur la base d'un ou de plusieurs calculs pour coordonner une arrivée synchrone ou une arrivée séquentielle avec au moins un autre premier navire de transport par voie navigable, les un ou plusieurs calculs consistant à :
calculer une heure d'arrivée estimée pour chaque navire de transport par voie navigable se déplaçant jusqu'à un premier port, correspondant à l'heure à laquelle chaque navire de transport par voie navigable arriverait au premier port s'il se déplaçait à sa vitesse normale ;
produire une séquence d'arrivée estimée au premier port ;
produire un numéro de file d'attente pour l'arrivée au premier emplacement d'attente prédéfini pour chaque navire de transport par voie navigable sur la base de la séquence d'arrivée estimée au premier port ; et
produire l'heure d'arrivée cible optimale différente de l'heure d'arrivée estimée pour chaque navire de transport par voie navigable, avec la vitesse optimale correspondante, tout en conservant le numéro de file d'attente pour chaque navire de transport par voie navigable ; et
envoyer, à l'aide du système informatique et au premier navire de transport par voie navigable, un premier message contenant des informations concernant la vitesse optimale et l'heure d'arrivée cible optimale.

2. Procédé selon la revendication 1, dans lequel le système informatique comprend un système de coordination de navires de transport par voie navigable et/ou un ordinateur serveur sur un réseau et/ou un système informatique en nuage sur un réseau et/ou un système informatique distribué.

3. Procédé selon la revendication 1, dans lequel les un ou plusieurs systèmes de suivi de navire de transport par voie navigable tiers comprennent un système d'identification automatique ("AIS") et/ou un système de suivi de navire basé sur un satellite d'observation de la Terre et/ou un système de service du trafic maritime ("VTS") et/ou un système radar marin et/ou un système de maître de port et/ou un système de garde côtière.

4. Procédé selon la revendication 1, dans lequel les informations spécifiques relatives au navire comprennent des données de position et/ou des données de vitesse et/ou des données de tirant d'eau et/ou des informations de voyage et/ou des données de capteur de consommation de carburant embarqué et/ou ou des états d'entretien.

5. Procédé selon la revendication 1, dans lequel les données relationnelles comprennent des données concernant une position et/ou un vecteur et/ou une proximité des un ou plusieurs premiers navires de transport par voie navigable dans la région géographique prédéterminée les uns par rapport aux autres et par rapport aux un ou plusieurs points d'ancrage et/ou un ou plusieurs ports et/ou ou un ou plusieurs emplacements d'attente prédéfinis.

6. Procédé selon la revendication 5, comprenant en outre les étapes consistant à :
analyser, à l'aide du système informatique, des données d'image ou vidéo provenant des troisièmes données provenant des un ou plusieurs systèmes d'observation par satellite pour générer les données relationnelles.

7. Procédé selon la revendication 1, dans lequel le calcul de la vitesse optimale à laquelle le premier navire de transport par voie navigable parmi les un ou plusieurs premiers navires de transport par voie navigable doit se déplacer le long de la première trajectoire depuis sa position en cours jusqu'au premier emplacement d'attente prédéfini à l'heure d'arrivée cible optimale correspondante comprend le calcul, à l'aide du système informatique, de la vitesse optimale sur la base au moins en partie de calculs pour arriver à l'heure d'arrivée cible optimale pour réduire le temps d'attente pour l'amarrage à un port voisin au premier emplacement d'attente prédéfini et/ou de calculs pour réduire les émissions de gaz à effet de serre pendant le déplacement le long de la première trajectoire.

8. Procédé selon la revendication 1, dans lequel le premier message comprend des instructions pour se déplacer à la vitesse optimale, sur la base d'obligations contractuelles obligeant chacun d'un ou de plusieurs propriétaires ou opérateurs du premier navire de transport par voie navigable à suivre les instructions.

9. Procédé selon la revendication 1, dans lequel la réception d'au moins deux types de données parmi des premières données, des deuxièmes données et des troisièmes données, l'analyse d'au moins deux types de données parmi les premières données, les deuxièmes données et les troisièmes données pour calculer la vitesse optimale et/ou l'heure d'arrivée cible optimale, et l'envoi du premier message sont réalisés dynamiquement en temps réel ou quasi en temps réel.

10. Procédé selon la revendication 1, comprenant en outre les étapes consistant à :
analyser, à l'aide du système informatique, les au moins deux types de données parmi les premières données, les deuxièmes données et les troisièmes données pour calculer une trajectoire optimale correspondante, une heure d'arrivée cible et/ou une vitesse correspondants pour chacun des deux ou plus de deux seconds navires de transport par voie navigable parmi les un ou plusieurs premiers navires de transport par voie navigable dans la région géographique prédéterminée pour coordonner l'arrivée à un second emplacement d'attente prédéfini parmi les un ou plusieurs emplacements d'attente prédéfinis ; et
envoyer, à l'aide du système informatique et à chaque second navire de transport par voie navigable, un second message contenant des informations concernant la trajectoire optimale, l'heure d'arrivée cible et/ou la vitesse correspondants.

11. Procédé selon la revendication 10, dans lequel le calcul de la trajectoire optimale, de l'heure d'arrivée cible et/ou de la vitesse correspondants pour chacun de deux ou plus de deux seconds navires de transport par voie navigable pour coordonner l'arrivée au second emplacement d'attente prédéfini comprend le calcul, à l'aide du système informatique, de chaque trajectoire optimale, de l'heure d'arrivée cible et/ou de la vitesse correspondants sur la base au moins en partie de calculs pour réduire le temps d'attente pour l'amarrage à un port voisin au second emplacement d'attente prédéfini et/ou de calculs pour coordonner l'arrivée synchrone de tous les deux ou plus de deux seconds navires de transport par voie navigable et/ou de calculs pour réduire les émissions de gaz à effet de serre pendant le déplacement vers le second emplacement d'attente prédéfini.

12. Procédé selon la revendication 10, dans lequel le second message comprend des instructions pour se déplacer sur la trajectoire et à la vitesse optimales correspondantes pour arriver à l'heure d'arrivée cible correspondante, sur la base d'obligations contractuelles obligeant chacun d'un ou de plusieurs propriétaires ou opérateurs d'un navire correspondant des deux ou plus de deux seconds navires de transport par voie navigable à suivre les instructions.

13. Procédé selon la revendication 1, comprenant en outre les étapes consistant à :
identifier, à l'aide du système informatique, un emplacement d'attente prédéfini parmi les un ou plusieurs emplacements d'attente prédéfinis sur la base au moins en partie de données géographiques et hydrographiques associées à un port voisin et/ou un ou plusieurs points d'ancrage autour du port voisin.

14. Système, comprenant :
un système informatique, comprenant :
au moins un premier processeur ; et
un premier support non transitoire lisible par ordinateur couplé en communication à l'au moins un premier processeur, premier support non transitoire lisible par ordinateur sur lequel est stocké un logiciel informatique comprenant un premier ensemble d'instructions qui, lorsqu'elles sont exécutées par l'au moins un premier processeur, amènent le système informatique à :
recevoir au moins deux types de données parmi des premières données, des deuxièmes données et des troisièmes données, dans lequel les premières données sont des données provenant d'un ou de plusieurs systèmes de suivi de navire de transport par voie navigable tiers et comprennent un emplacement de chaque navire de transport par voie navigable parmi une pluralité de navires de transport par voie navigable dans une région géographique prédéterminée, dans lequel les deuxièmes données sont des données associées à chacun d'un ou de plusieurs premiers navires de transport par voie navigable parmi la pluralité de navires de transport par voie navigable et comprennent des informations spécifiques relatives au navire, et dans lequel les troisièmes données sont des données provenant d'un ou de plusieurs systèmes d'observation par satellite et comprennent des données relationnelles associées aux un ou plusieurs premiers navires de transport par voie navigable dans la région géographique prédéterminée les uns par rapport aux autres et par rapport à un ou plusieurs points d'ancrage et/ou un ou plusieurs ports et/ou un ou plusieurs emplacements d'attente prédéfinis qui sont à l'extérieur des un ou plusieurs points d'ancrage et à l'extérieur des un ou plusieurs ports ;
analyser les au moins deux types de données parmi les premières données, les deuxièmes données et les troisièmes données pour calculer une vitesse optimale à laquelle un premier navire de transport par voie navigable parmi les un ou plusieurs premiers navires de transport par voie navigable doit se déplacer le long d'une première trajectoire depuis sa position en cours jusqu'à un premier emplacement d'attente prédéfini parmi les un ou plusieurs emplacements d'attente prédéfinis pour arriver à une heure d'arrivée cible optimale correspondante sur la base d'un ou de plusieurs calculs pour coordonner une arrivée synchrone ou une arrivée séquentielle avec au moins un autre premier navire de transport par voie navigable, les un ou plusieurs calculs consistant à :
calculer une heure d'arrivée estimée pour chaque navire de transport par voie navigable se déplaçant vers un premier port, correspondant à l'heure à laquelle chaque navire de transport maritime arriverait au premier port s'il se déplaçait à sa vitesse normale ;
produire une séquence d'arrivée estimée au premier port ;
produire un numéro de file d'attente pour l'arrivée au premier emplacement d'attente prédéfini pour chaque navire de transport par voie navigable sur la base de la séquence d'arrivée estimée au premier port ; et
produire l'heure d'arrivée cible optimale différente de l'heure d'arrivée estimée pour chaque navire de transport par voie navigable, avec la vitesse optimale correspondante, tout en conservant le numéro de file d'attente pour chaque navire de transport par voie navigable ; et
envoyer, au premier navire de transport par voie navigable, un premier message contenant des informations concernant la vitesse optimale et l'heure d'arrivée cible optimale.

15. Système selon la revendication 14, dans lequel le calcul de la vitesse optimale à laquelle le premier navire de transport par voie navigable parmi les un ou plusieurs premiers navires de transport par voie navigable doit se déplacer le long de la première trajectoire depuis sa position en cours jusqu'au premier emplacement d'attente prédéfini à l'heure d'arrivée cible optimale correspondante comprend le calcul, à l'aide du système informatique, de la vitesse optimale sur la base au moins en partie d'un ou de plusieurs calculs pour arriver à l'heure d'arrivée cible optimale pour réduire le temps d'attente pour l'amarrage à un port voisin au premier emplacement d'attente prédéfini, ou des calculs pour réduire les émissions de gaz à effet de serre pendant le déplacement le long de la première trajectoire.
